# EUROPÄISCHE PATENTSCHRIFT

(11) **EP 1 530 955 B1**
(45) Veröffentlichungstag und Bekanntmachung des Hinweises auf die Patenterteilung: **10.12.2008**
(21) Anmeldenummer: 03025936.0
(22) Anmeldetag: 13.11.2003
(51) Int. Cl.: A61C 17/26, A61C 17/34

(54) **Zahnbürste**
Toothbrush
Brosse à dents

(43) Veröffentlichungstag der Anmeldung: 18.05.2005
(73) Patentinhaber: Trisa Holding AG, 6234 Triengen (CH)
(72) Erfinder: Pfenniger, Philipp, 6234 Triengen (CH); Pfenniger, Adrian, 6234 Triengen (CH); Fischer, Franz, 6234 Triengen (CH)
(74) Vertreter: Schaad, Balass, Menzl & Partner AG

(56) Entgegenhaltungen:
- WO-A-97/04719
- DE-A- 2 916 215
- GB-A- 2 278 537
- US-A- 3 274 631
- US-A- 3 370 214
- US-A- 3 577 579
- US-A- 4 275 749
- US-A- 4 827 552

## Beschreibung

Die Erfindung betrifft eine Zahnbürste mit einer elektrisch betriebenen Funktionseinheit mit den Merkmalen von Anspruch 1.

Elektrische Zahnbürsten mit wiederaufladbaren Energiespeichern (Akkumulatoren) sind bekannt und auf dem Markt weit verbreitet. In den meisten Fällen wird elektrische Energie von der Ladestation induktiv auf den Energiespeicher übertragen. Dieses ist beispielsweise in der CH 656 987 beschrieben. Da keine elektrischen Leitungsverbindungen zwischen dem Energiespeicher und der Ladestation notwendig sind, liegt der Vorteil dieser Ladetechnik in der einfachen Handhabung für den Benutzer (d.h. einfaches Einlegen in die Ladestation ohne Suchen von Kontakten) und der geringen Anfälligkeit gegen äussere Einwirkungen, z.B. durch Wasser oder Zahnpasta, welche zur Verschmutzung oder Korrosion von elektrischen Kontakten führen können. Der Nachteil der induktiven Ladung besteht in den hohen Herstellungskosten und im grossen Platzbedarf für die Ladestation, die eine aufwendige Ladeschaltung umfasst. Die Zahnbürsten sind ebenfalls gross, schwer und unhandlich, da zusätzlich zu den Akkumulatoren mindestens eine Sekundärspule mit einer Gleichrichteranordnung vorhanden sein muss.

Aus der US 4,827,552 ist eine gattungsgemässe Elektrozahnbürste mit einem über einen Steckkontakt aufladbaren Energiespeicher bekannt. Das Kontaktelement befindet sich ungeschützt am Fuss der Elektrozahnbürste und somit in einem Bereich, in dem sich vom Bürstenkopf abtropfendes Wasser ansammelt. Die einwandfreie Stromübertragung ist durch Korrosion und Verschmutzungen der Kontaktelemente gefährdet.

Ziel der Erfindung ist es, eine kostengünstige Ladetechnik zu entwickeln, welche einen zuverlässigen Betrieb ermöglicht, platzsparend eingesetzt werden kann, möglichst einfach zu handhaben ist und minimale Abmasse der Elektrozahnbürste erlaubt.

Die Aufgabe wird gelöst durch eine Zahnbürste mit den Merkmalen von Anspruch 1. Vorteilhafte Weiterbildungen der Erfindung ergeben sich aus den abhängigen Ansprüchen, der Beschreibung und den Zeichnungen.

Die an sich bekannte direkte Ladetechnik für Elektrogeräte, z.B. Mobiltelefone, wird erfindungsgemäss derart angepasst, dass sie auch bei Zahnbürsten mit elektrischen Funktionsbauteilen im Nassbereich eingesetzt werden kann. Der Ladestrom wird mittels eines Netzteils - bestehend aus einem Transformator und einem Gleichrichterelement oder bestehend aus einer getakteten elektronischen Schaltung - direkt, d.h. mittels Kontaktelementen auf die elektrische Zahnbürste übertragen. Innerhalb der Zahnbürste ist statt einer platz- und kostenaufwendigen Ladeschaltung nur ein Kontaktelement, gegebenenfalls mit Verbindungsleitungen zum Akkumulator, vorhanden. Die Zahnbürste kann somit wesentlich schlanker und leichter als herkömmliche Elektrozahnbürsten mit induktiver Ladung gestaltet werden und ist leichter handhabbar. Zur Erfüllung ästhetischer Ansprüche besteht mehr Designfreiheit. Die Erfindung ermöglicht den Einsatz günstiger, in Masse produzierter Komponenten, evtl. Einsatz von Normelementen, und damit die Verwendung im Haushalt bereits vorhandener Netzteile.

Erfindungsgemäss sind das Kontaktelement und der Energiespeicher zumindest in der geschlossenen Stellung der Gehäuseteile durch ein Dichtelement abgedichtet, so dass beim bestimmungsgemässen Gebrauch der Zahnbürste kein Wasser oder sonstige Fremdstoffe eindringen können. Korrosion und Verschmutzung des Energiespeichers und der elektrischen Kontakte wird so verhindert.

Bei einer Variante der Erfindung befinden sich Energiespeicher und Kontaktelement gemeinsam im Innenraum, der beim bestimmungsgemässen Gebrauch, d.h. beim Putzen, durch das Dichtelement in Form des zweiten Gehäuseteils abgedichtet ist. Das Dichtelement kann zumindest so weit bewegt werden, dass das Kontaktelement für den Ladevorgang zugänglich ist.

Bei einer anderen Variante der Erfindung ist der Bereich des Innenraums, in dem sich der Energiespeicher befindet, permanent abgedichtet, d.h. beim bestimmungsgemässen Gebrauch der Zahnbürste und beim Ladevorgang wasserdicht verschlossen. Es kann vorgesehen sein, dass diese Dichtung z.B. für Reparaturen entfernt werden kann. Der Energiespeicher kann aber auch ganz eingegossen sein. Das Kontaktelement befindet sich ausserhalb des abgedichteten Innenraumbereichs und ist durch ein Dichtelement in Form des zweiten Gehäuseteils, z.B. eine Verschlusskappe, abgedichtet.

In einer vorteilhaften Weiterbildung der Erfindung ist die Ladelogik so gestaltet, dass der Betrieb des Geräts während des Ladens nicht möglich ist. Dadurch werden Kurzschlüsse und Verunreinigungen des Innenraums verhindert und die Benutzersicherheit erhöht.

Die Zahnbürste wird vorzugsweise so verpackt, dass ihre Präsentation in der Verpackung selbsterklärend ist. Beispielsweise sind das Netzteil und/oder die Kontaktelemente durch Sichtfenster sichtbar. Auf diese Weise kann der Käufer auch überprüfen, ob er bereits ein geeignetes Netzteil besitzt.

Das Funktionsbauteil der elektrischen Zahnbürsten umfasst beispielsweise ein Vibrationselement, welches den Kopf in Schwingung versetzt, oder einen Antrieb, mit dem das Kopfteil oszilliert werden kann. Es können auch andere Verbraucher vorgesehen sein, z.B. Licht, Musik, Zeitmessung. Zusätzlich sind vorzugsweise Schaltelemente vorgesehen, welche den Energieverbraucher gegenüber dem Akkumulator ein- oder ausschalten. Hier können mechanische oder elektronische Schalter vorgesehen sein. Der Schalter kann durch den Benutzer (z.B. Drucktaste, Drehschalter, Frosch, Kontaktelement im Verschluss, Bewegungssensor, Drucksensor etc.) oder durch andere äussere Einwirkungen ausgelöst werden. Der Akkumulator besteht vorzugsweise aus dem Typ NiCd (NickelCadmium) oder NiMh (NickelMetalhydrid). Es werden in Masse produzierte Zellen des Typs AA oder AAA eingesetzt. Die Geräte werden vorzugsweise mit einer Spannung von unter 4 Volt, vorzugsweise mit 1.2 Volt betrieben. Aus Kostengründen sollte mit einer einzigen 1.2 Volt Akkumulatorzelle gearbeitet werden. Eine optimale Nutzungsdauer pro Entladezyklus des Akkumulators ist mindestens 2h, vorzugsweise aber mindestens 5h oder mehr. Falls dieses Verhältnis mit einer AAA Zelle erreicht werden kann, ist diese Grösse aus Platzgründen bevorzugt. Bei einer Zahnbürste mit vibrierendem Kopfteil ist die bevorzugte Zellenkapazität AAA 300 - 800 mAh, bei einer Zahnbürste mit rotierendem Kopfteil ist die bevorzugte Zellenkapazität AA 600 - 2300 mAh.

Da der Akkumulator besonders während dem Ladevorgang explosive Gase wie Sauerstoff oder/und Wasserstoff produzieren kann, ist der Innenraum vorzugsweise mit einer gasdurchlässigen, aber den Innenraum gegen Wasser schützenden, Membrane abgedichtet.

Die Elektrische Zahnbürste besteht vorzugsweise aus einer oder mehreren Struktur gebenden Hartkomponenten (z.B. PS Polystyrol, ABS AcrylButadienStyrol, SAN Styrol-Acrylnitril, PET Polyester, PA Polyamid) vorzugsweise aber aus PP Polypropylen und mindestens einer oder mehreren Weichkomponenten. Die Weichkomponenten sind vorzugsweise aus thermoplastischem Elastomer TPE gebildet, welches affin zur eingesetzten Hartkomponente ist und im Zweikomponentenspritzguss eine Verbindung mit dieser eingeht. Üblicherweise wird die Weichkomponente für eine flexible Schaltmembrane eingesetzt. Die elektrische Zahnbürste enthält u.a. einen Innenraum mit elektrischen Komponenten, welche wasserdicht abgeschlossen sind. Der Innenraum wird vorzugsweise durch einen Kernzug im Werkzeug der Hartkomponente und der Weichkomponente ausgeformt.

Es wird in allen Varianten ein Netzteil eingesetzt. Dieses Netzteil steht in Verbindung mit der lokalen Stromversorgung (z.B. 230V AC oder 115V AC). Vorzugsweise ist das Netzteil so ausgebildet, dass der Netzstecker im Gehäuse integriert ist und das Netzteil somit direkt in eine Steckdose eingesteckt werden kann. In diesem Fall wird ein Netzteil der Schutzklasse II, 4kVolt und IP X4 eingesetzt (Norm IEC 60529, DIN 40050). Weniger bevorzugt kann aber auch ein Netzkabel zwischen Steckdose und Netzteil vorgesehen werden, bei dieser Ausgestaltungsvariante müsste ein Netzteil mit einem höheren Schutzgrad z.B. IP X7 eingesetzt werden. Das Netzteil ist auf jeden Fall kurzschlussfest zu halten.

Im Netzteil wird die lokale Netz-Wechselspannung (z.B. 210 - 250 Volt AC 50 Hertz) in eine Niedervolt-Gleichspannung umgewandelt um damit den Akkumulator aufzuladen. Mittels einem Kabel und Kontaktelement wird nun die Gleichspannung (4 - 7 Volt DC) vom Netzteil direkt auf die elektrische Zahnbürste übertragen. Die Ladeströme liegen bevorzugt bei 30 - 230 mA entsprechend 10% der Akkumulatoren Kapazität (C/10). Dies führt zu einer Ladezeit von 10 - 14 Stunden bei oben erwähnten Akkumulatorentypen. Das Kabel dient zur Überbrückung der Distanz zwischen dem nächsten Netzanschluss und einer Abstellgelegenheit der Elektrischen Zahnbürste. Diese Kabellänge beträgt zwischen 0.5 m und 2 m, vorzugsweise 1.5 m. In einer weniger bevorzugten Variante wird die elektrische Zahnbürste direkt in das Netzteil mit entsprechenden Kontaktelementen eingesteckt.

Vorzugsweise werden Kontaktelemente von Typ Stecker und Buchse benutzt. Der Stecker wird vorzugsweise am Kabel des Netzteils angebracht. Aus Sicherheitsgründen wird ein Stecker verwendet, welcher innen hohl ist, und jeweils eine Phase aussen und innen am Stecker vorsieht. Dieser Aufbau vermeidet Kurzschlüsse bei der Auflage des Steckers auf einer elektrisch leitenden Oberfläche. Das kontaktierende Element des Steckers hat etwa folgende Masse (Länge 3 - 15 mm, vorzugsweise 10 mm / Durchmesser 2 - 10 mm, vorzugsweise 5.5 mm).

Das als Buchse ausgebildete Kontaktelement ist vorzugsweise in oder an der elektrischen Zahnbürste angebracht. Vorzugsweise verfügt die Buchse (z.B. mittels eines Pins) über die Möglichkeit, neben dem Stecker auch durch andere elektrisch leitende Bauteile (z.B. im Zahnbürstendeckel) kontaktiert zu werden. Dieser Pin sollte aus diesem Grund über einen minimalen Durchmesser von 1 - 4 mm vorzugsweise 2.4 mm verfügen. Der Pin ist vorzugsweise mit dem (+) Pol des Motors und des Akkumulators verbunden. Mit dem Kontaktelement wirkt vorzugsweise ein Schalter zusammen, welcher beim Ladevorgang den Verbraucher abkoppelt und nur den Akkumulator lädt.

Um die Kosten tief zu halten, sind die Steckkontakte vorzugsweise in Masse produzierte Teile. Die metallischen Oberflächen der Kontaktelemente sind in der Regel oberflächenbeschichtet (z.B. Gold, Nickel, Chrom etc.). Ein Nickelschicht garantiert einerseits eine gute elektrische Leitfähigkeit und eine besonders gute Korrosionsresistenz gegen das aggressive Zahnpasta-Wassergemisch bei geringen Gestehungskosten. Die Buchse wird in der Regel in ihren Ausmassen gleich gross oder kleiner gewählt wie der Durchmesser des Akkumulators, so dass die Dimensionen des Innenraumes minimiert werden können. (Aussenmasse: Breite/Höhe der Buchse beim Einsatz eines Akkumulatoren Grösse AAA vorzugsweise kleiner als 10.5 mm, Länge abhängig vom gewählten Steckweg, Akkumulatoren Grösse AA kleiner 14.5 mm).

Der Steckvorgang wird vorzugsweise mit einer deutlichen Bewegung (Translation, Rotation oder einer Kombination davon) von 1 - 10 mm und/oder 10 - 180° vorzugsweise des Steckers bezüglich der Buchse ausgeführt. Dies erlaubt bei Verschmutzung und Korrosion ein gewisses Scheuern der Kontaktflächen, welches eine selbstreinigende Wirkung hat und damit die Kontaktierung erleichtert. Während dem Steckvorgang ist zwischen den zu kontaktierenden Flächen ein gewisser Druck zu erzeugen (z.B. mittels Federwirkung einer kontaktierenden Fläche auf die andere), damit können Verschmutzungen ebenfalls wirkungsvoll weggeschabt werden. Der Steckvorgang wird also vorzugsweise mittels einer Kombination von Bewegung und gegenseitigem Druck der Kontaktierungsflächen ausgeübt. Am Ende des Steckweges soll der Stecker in der Buchse einrasten, so dass ein selbständiges Lösen des Steckers oder Wackelkontakte zwischen Stecker und Buchse verhindert werden. Die zum Lösen des Steckers nötige Kraft ist vorzugsweise grösser als das Eigengewicht der kompletten elektrischen Zahnbürste in Zugrichtung des Steckers. Vorzugsweise verfügt die Buchse über eine formschlüssige Verrastung mit ihrer Trägereinheit, z.B. der Leiterplatte, damit die Steckkräfte nicht auf den z.B. gelöteten elektrischen Kontakten ruhen.

Da bei oben definiertem Steckvorgang gewisse Kräfte ausgeübt werden, ist darauf zu achten, dass fragile Komponenten der elektrischen Zahnbürste keinen Schaden erleiden. Insbesondere ist darauf zu achten, dass die Borsten nicht zerdrückt werden oder flexible oder schwingungsdämpfende Mittel im Halsbereich nicht durch die entstehenden Kräfte deformiert werden. Aus diesem Grund sollen die Kontaktelemente am oder im Handgriff so positioniert werden, dass der Handgriff noch genügend Platz zur Verfügung hat, um diesen mit der anderen Hand komfortabel zu halten. Diesbezüglich ist es wünschenswert, die Kontaktelemente am einen oder anderen Ende des Handgriffes zu positionieren. Zusätzlich sollen dem Benutzer die Haltepunkte im Griffbereich, an die elektrische Zahnbürste während dem Steckvorgang gehalten werden sollte, gekennzeichnet werden. Dazu können geometrische Elemente wie (Dellen, Noppen, Oberfächentexturen etc.), und/oder Zonen mit Weichmaterialien und/oder ein entsprechender Aufdruck dienen.

Die Steckrichtung wird in einem Winkel zwischen -90° und 90° zur Längsachse des Griffteiles vorgeschlagen, vorzugsweise wird aber in Richtung dieser Hauptachse gesteckt, damit mit der anderen Hand wie oben erwähnt die Steckkräfte am besten aufgefangen werden können.

Der Steckvorgang kann vereinfacht werden, indem die Kontaktelemente einen rotationssymmetrischen, vorzugsweise kreisrunden Querschnitt aufweisen. Die relative Lage der Steckkontakte spielt somit keine Rolle und muss vom Benutzer nicht gesucht werden. Einzig die Steckrichtung muss stimmen. In den verschiedenen Ausgestaltungsvarianten ist die Steckrichtung vorzugsweise parallel oder senkrecht zur Öffnungsrichtung des Verschlusses vorgesehen.

Die Lage der Kontaktelemente bezüglich der elektrischen Zahnbürste ist entscheidend bezüglich Verschmutzungstendenz, Abdichtung des Innenraumes, Steckvorgang bei Laden und Komfort im Gebrauch der elektrischen Zahnbürste. Bezüglich der Verschmutzung ist das Kontaktelement an der elektrischen Zahnbürste so zu positionieren, dass sich bei der Ablage nach dem jeweiligen Gebrauch der Zahnbürste am Kontaktelement keine Zahnpastarückstände bilden können. Vorzugsweise wird die elektrische Zahnbürste mit vorzugsweise aus Weichkomponente gebildeten Geometrieelementen an der Aussenhülle ausgestattet, damit die Ablageposition nach dem Gebrauch für den Benutzer eindeutig definiert ist. Zudem sollten die elektrischen Kontaktelemente an einer Stelle angebracht werden, an der keine Zahnpasta/Wassertropfen während der Ablage nach dem Gebrauch entstehen können. Neben einer oder allenfalls mehrerer eindeutigen horizontal liegenden Ablagepositionen, soll bei dieser Überlegung auch das Zahnglas oder ein abgeflachtes Griffteil eingeschlossen sein, bei welchem die elektrische Zahnbürste eine mehr oder weniger vertikale Position einnimmt. Vorzugsweise ist die Öffnung der Kontaktelemente (z.B. der Buchse) bei der jeweiligen Lage auf der zur Fliessrichtung des Wassers abgewandten Seite angebracht.

Ein weiteres Kriterium für die Lage der Kontaktelemente ist der Gebrauchskomfort. Da besagte Kontaktelemente mindestens teilweise aus metallischen Komponenten bestehen, wird die Position so gewählt, dass beim Gebrauch der elektrischen Zahnbürste durch den entstehenden Putzdruck (approximativ 100g - 1kg im Durchschnitt 300g) durch die Kontaktelemente keine Druckstellen auf der führenden Hand entstehen können. Die Kontaktelemente werden dazu im Inneren der elektrischen Zahnbürste eingebracht und mit dem Dichtelement abgedichtet, z.B. einer schützenden Kunststoffschicht aus Weich- oder Hartkomponente oder einer Kombination davon überdeckt. Bei dieser Ausgestaltungsvariante kann die Oberfläche des Griffteils geschlossen mit Kunststoffen bedeckt werden, so dass während des Putzvorgangs keine Druckstellen entstehen können. Die Kontaktelemente sind ebenfalls besser gegen Verschmutzung geschützt.

Bezüglich Abdichtung des Innenraums und der Kontaktelemente bestehen folgende oben bereits erwähnte Ausgestaltungsvarianten:
(i) Die Kontaktelemente sind im eigentlichen Innenraum der elektrischen Zahnbürste an einem für den Benutzer leicht zugänglichen Ort, vorzugsweise in unmittelbarer Nähe der Trennlinie zwischen Griffteil und Verschluss, platziert.
   Der ganze Innenraum einschliesslich des Kontaktelements wird mit einem Dichtelement in Form des zweiten Gehäuseteils, z.B. einem Verschluss, dichtend abgeschlossen. Dieses Dichtelement wird bei Variant (i) als primäres Dichtelement bezeichnet. Das primäre Dichtelement kann in einem Arbeitsgang mit der elektrischen Zahnbürste aus derselben Hart- und Weichkomponente, möglicherweise nur aus der Weichkomponente hergestellt werden. Es wird optional eine permanente Verbindung zwischen dem primären Dichtelement und dem Zahnbürstengriff vorgesehen, z.B. in Form eines Filmscharniers. Die Kontaktelemente werden an einer festen Trägereinheit aus Kunststoff oder einer Leiterplatte fixiert und elektrisch mit den Akkumulatoren (z.B. mittels Leiterbahnen oder Kabeln etc.) verbunden. Diese feste Trägereinheit kann noch weitere Funktionseinheiten wie Schalter, Antrieb und Akkumulator etc. enthalten. Vorzugsweise besteht sie aus einer Leiterplatte mit den fest damit verbundenen Kontaktelementen, dem Akkumulator und weiteren Bauteilen der Schaltung, z.B. Leiterbahnen, Widerstand. Diese sogenannte Akkumulatorenbaugruppe ist ein in sich abgeschlossenes System, das gegen aussen wie eine wiederaufladbare Batterie mit integrierten Steckkontakten wirkt. Diese Baugruppe kann wie eine gewöhnliche Einwegbatterie verwendet werden. Die Pole des Energiespeichers sind direkt bzw. über das Kontaktelement von aussen zugänglich.
   Um die Handlichkeit der elektrischen Zahnbürste zu optimieren, wird vorgeschlagen die Kontaktelemente in Serie mit dem Akkumulator (d.h. hintereinander) an der Trägereinheit zu platzieren. Der Durchmesser des Innenraumes entspricht damit in etwa der Grösse des Akkumulators plus Trägereinheit. In den Ausgestaltungsvarianten, bei denen ein Akkumulator der Grösse AAA eingesetzt wird, entsprechen der Durchmesser der AAA Batterie und die Dicke der Trägereinheit mit Leiterplatte und Akkumulator in etwa dem Durchmesser einer AA Batterie. Die oben beschriebene minimale Akkumulatorenbaugruppe kann so mit wenig Aufwand durch eine AA Batterie ersetzt werden. Mit wenig Änderungen (Überbrückung der Längendifferenz) kann somit die elektrische Zahnbürste mit einer Einweg AA Batterie betrieben werden. Des weiteren können dieselben Spritzgusswerkzeuge zur Herstellung einer wiederaufladbaren elektrischen Zahnbürste und einer Zahnbürste mit einem Einweg-Energiespeicher verwendet werden.
   Die Gefahr der Verschmutzung der Kontaktelemente besteht bei dieser Ausgestaltungsvariante nicht, da der Innenraum nur zur Ladung des Akkumulators geöffnet wird. Bei dieser Variante ist vorzugsweise gewährleistet, dass das Gerät bei geöffnetem Innenraum, z.B. während des Ladevorgangs, nicht benutzt werden kann, da der Innenraum in diesem Zustand über keinerlei Dichtung verfügt. Bei dieser Ausgestaltungsvariante werden die anderen technischen Komponenten (wie Antrieb, Akkumulator etc.) vorzugsweise mittels einer nicht notwendigerweise wasserdichten Blende (z.B. mit einem montierten Kunststoffteil oder einer selbstklebenden Kunststoffetikette) abgedeckt. Die Blende erlaubt während des Ladevorgangs einen Schutz gegen Spritzwasser in der Nasszelle und zeigt dem Benutzer eindeutig die Kontaktelemente, welche davon nicht abgedeckt sind. Andere technische Einheiten, welche den Benutzer verwirren könnten, sind nicht sichtbar.
(ii) Der Bereich des Innenraums der elektrischen Zahnbürste, in dem sich der Energiespeicher befindet, wird gegenüber den Kontaktelementen abgedichtet. Zusätzlich werden die Kontaktelemente durch das zweite Gehäuseteil gegenüber der Aussenwelt abgedichtet. Die zur Abdichtung zwischen Energiespeicher und Kontaktelementen verwendete Dichtung wird bei Variante (ii) als primäres Dichtelement bezeichnet. Das zweite Gehäuseteil wird bei Variante (ii) als sekundäres Dichtelement bezeichnet. Um eine einwandfreie Dichtung zu gewährleisten, kann das primäre Dichtelement durch ein Gehäuseteil mit angespritzten oder separaten Dichtungen, z.B. O-Ringen, realisiert sein. Aus herstellungstechnischen Gründen werden die Kontaktelemente aber vorzugsweise an der Hartkomponente formschlüssig platziert und anschliessend mittels der Weichkomponente überbeziehungsweise umspritzt und fixiert und damit vom Innenraum der elektrischen Zahnbürste abgedichtet. Die Kontaktelemente kommunizieren entweder direkt oder mittels einer elektrischen Verbindung, z.B. einem mit Kunststoff ummantelten Litzendraht, mit weiteren elektrischen Komponenten, z.B. der Leiterplatte, dem Akkumulator, im Innenraum der Zahnbürste.
   Um das Gerät zu laden, muss somit nur das äussere sekundäre Dichtelement gelöst werden. Der Innenraum ist in jedem Zustand (beim Laden, im Gebrauch) vollständig abgedichtet. Es ist nicht vorgesehen, dass der Benutzer die primäre Dichtung öffnet. Unter Umständen kann bei dieser Ausgestaltungsvariante die elektrische Zahnbürsten auch während dem Ladevorgang, d.h. mit eingestecktem Kontaktelement benutzt werden. Die sekundäre Dichtung kann in Form eines zusätzlichen Deckels erstellt werden. Vorzugsweise wird auch die sekundäre Dichtung mit der zur Verfügung stehenden Weichkomponente hergestellt. Sekundäre Dichtelemente sollten aus Kostengründen in einem Arbeitsgang mit den vorhandenen Hart- oder Weichkomponente hergestellt werden. Es wird zudem vorgeschlagen, diese Dichtelemente fest mit dem Griffteil der elektrischen Zahnbürste zu verbinden, z.B. mittels eines Filmscharniers oder einer flexiblen Verbindung aus gummielastischem Material. Dadurch können diese während des Ladevorgangs nicht verloren gehen.

Die Akkumulatorenbaugruppe besteht in ihrer Minimalanforderung aus Akkumulator, Widerstand und Trägereinheit z.B. in Form einer Leiterplatte. Wenn das Kontaktelement nicht in den Körper (Verschluss, Griffteil) eingegossen ist, ist auch das Kontaktelement vorzugsweise Bestandteil der Akkumulatorenbaugruppe, die somit eine oder mehrere Einwegbatterien ersetzen kann. Diese Baugruppe kann falls nötig mit weiteren Komponenten ergänzt werden, z.B. mit Schaltelementen, Timerfunktion, Motor, LED. Der eingesetzte Widerstand verhindert das Überladen des Akkumulatoren und erlaubt einen konstanten Ladestrom ab dem Netzteil. Beim Einsatz eines bevorzugten Netzteils mit einer Ausgangsleistung von unbelastet 7 Volt DC und belastet 4 Volt DC bei 230 mA ergeben sich bei verschiedenen Zellenkapazitäten je nach Ausführungsvariante beispielhaft folgende Widerstandswerte:

| Zellenkapazität (mAh) | Ladestrom (mA) | Widerstand (Ohm) |
|---|---|---|
| 600 | 60 | 120 |
| 1500 | 150 | 47 |
| 2300 | 230 | 22 |

Der Widerstand wird vorzugsweise eher höher gewählt als nötig, damit auch 'fremde' Netzteile mit einem höheren Ladestrom eingesetzt werden können, ohne dem Akkumulator zu schaden.

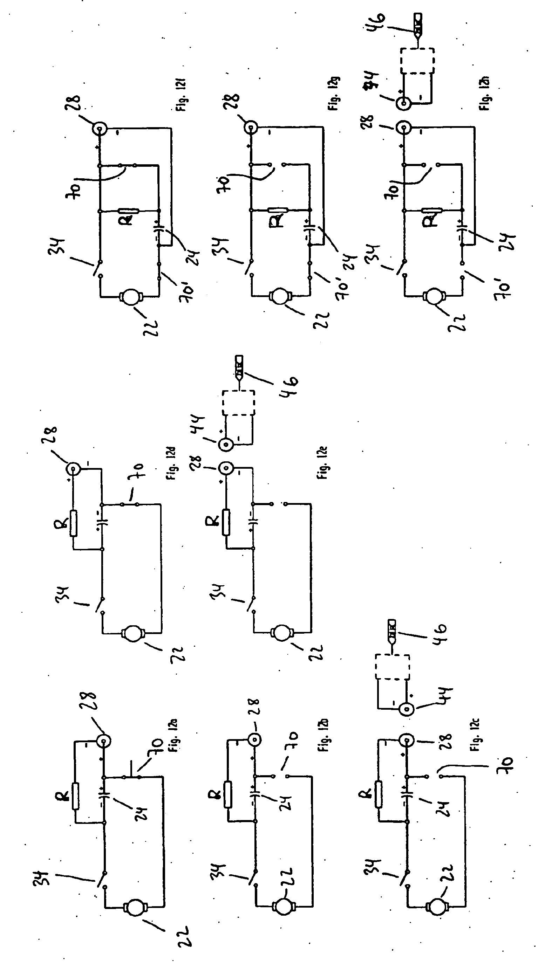

Die Ladelogik ist ein wesentlicher Bestandteil der gesamten Ladetechnik. Die erfindungsgemässe Ausgestaltung erlaubt die einwandfreie Ladung des Akkumulatoren sowie die differenzierte Einschränkung des Betriebes der elektrischen Zahnbürste während verschiedenen Betriebszuständen in Abhängigkeit der Abdichtung des Innenraumes. Dies wird unten mit Bezug auf Fig. 12 beschrieben.

In einer weiteren vorteilhaften Variante ist eine Haltevorrichtung für die elektrische Zahnbürste, z.B. in Form eines Ständers, vorgesehen. Die darin eingesteckte Zahnbürste ist so positioniert, dass die Kontaktelemente nicht in Fliessrichtung des Wassers bzw. an den Abtropfpunkten positioniert sind. Der Ladevorgang soll auch möglich sein, wenn der Benutzer die Haltevorrichtung nicht dabei hat. Die Haltevorrichtung ist entweder rein mechanisch, dient der elektrischen Zahnbürste nur als Abstütz- und Positionshilfe und enthält keine elektrischen Komponenten. Bei dieser Ausgestaltungsvariante ist sicherzustellen, dass die Kontaktelemente frei zugänglich sind, falls die elektrische Zahnbürste auf der Haltevorrichtung platziert ist. In einer anderen Variante enthält die Haltevorrichtung zusätzliche elektrische Elemente, z.B. Zeitmesseinheit, Ladezustandsanzeige, Ladekapazitätsanzeige, Musik. Diese zusätzlichen elektrischen Elemente werden durch dasselbe Kontaktelement gespiesen wie die elektrische Zahnbürste selber, d.h. sie funktionieren vorzugsweise mit derselben Betriebsspannung wie die elektrische Zahnbürste. In einer alternativen Ausgestaltungsvariante verfügt die Haltevorrichtung ebenfalls über einen zusätzlichen Akkumulator. Die Haltevorrichtung ist nur ein 'elektrisches Zwischenstück', welches entweder benutzt werden kann oder nicht. Auf Reisen kann die elektrische Zahnbürste bei dieser Ausgestaltungsvariante ebenfalls direkt mit dem Netzteil geladen werden. Folglich verfügt die Haltevorrichtung über die gleichen Steckkontakte wie das Netzteil und die elektrische Zahnbürste. Bei den Ausgestaltungsvarianten mit sekundären Dichtungen ist sicherzustellen, dass neben dem Steckelement der Haltevorrichtung ein entsprechender Platz für die sekundäre Dichtung, z.B. eine Ausnehmung, vorgesehen ist. Die Haltevorrichtung enthält vorzugsweise Mittel, welche das Platzieren oder die Entnahme der elektrischen Zahnbürste in der Haltevorrichtung feststellen, um damit elektrische Funktionen wie z.B. eine Zeitmessung auslösen. Das Feststellen der Anwesenheit der elektrischen Zahnbürste funktioniert mittels mechanisch betätigtem Drucktaster, ausgelöst durch den Benutzer oder während des Aufsetzens der Zahnbürste. Mit einer elektronische Analyse des Ladestromes/Ladespannung kann die Anwesenheit der Zahnbürste ebenfalls festgestellt werden, diese Ausgestaltungsvariante ist jedoch aufwendiger und kostenintensiver.

Da insbesondere bei der Haltevorrichtung mit Steckkontakten erhebliche Steckkräfte ausgeübt werden, wird vorgeschlagen, die Haltevorrichtung mit Fixierungsmitteln gegenüber dem Untergrund auszustatten. Dies kann mit dem Einbau von zusätzlichem Gewicht vorgesehen werden oder mit Haftelementen, z.B. einem Saugnapf. Werden für diese Haftelemente Weichmaterial eingesetzt, wird vorgeschlagen, wieder dasselbe Weichmaterial einzusetzen, welches auch für andere Aufgaben bereits verwendet ist, z.B. Membrane über Drucktasten, Abdichtung von elektrischen Komponenten im Innenraum, Griffmulden zum Handhaben, Bewegen der Haltevorrichtung, und diese in einem Arbeitsgang herzustellen.

Da die Zahnbürste erst nach einigen Putzzyklen aufgeladen werden muss, verfügt die Haltevorrichtung bevorzugt über zwei Abstellpositionen für die elektrische Zahnbürste. Die eine wird zum Laden verwendet (Bürste wird elektrisch verbunden), die andere zum reinen Abstellen der Zahnbürste ohne elektrische Verbindung.

In einer Verkaufseinheit befindet sich die elektrische Zahnbürste einschliesslich des Netzteils mit je nach Ausgestaltungsvariante eventuell zusätzlichen Ersatzköpfen / Aufsteckköpfen und optional der Haltevorrichtung. Das Netzteil inkl. Elementen für den Netzanschluss und die eingesetzten Kontaktelemente für den Anschluss an die Elektrozahnbürste sind vorzugsweise in einer Sichtpackung präsentiert, um dem Benutzer zu zeigen, dass es sich um eine wiederaufladbare Zahnbürste handelt. Als zusätzliche Option kann auch die primäre oder sekundäre Dichtung geöffnet präsentiert werden, dass der Benutzer sofort erkennt, wie die elektrische Zahnbürste wiederaufgeladen werden kann.

Beispiele der Erfindung sind in den Zeichnungen dargestellt und nachfolgend beschrieben. Es zeigen rein schematisch:
- Fig. 1a-i: eine erfindungsgemässe Zahnbürste bzw. Bestandteile davon in verschiedenen Ansichten;
- Fig. 2: eine Zahnbürste mit einem herkömmlichen, nicht wiederaufladbaren Energiespeicher;
- Fig. 3a-d, 4a-c, 5a-c, 6a-d, 7a+b, 8, 9: weitere erfindungsgemässe Zahnbürsten bzw. Bestandteile davon in verschiedenen Ansichten;
- Fig. 10a-c: eine nicht erfindungsgemäße Zahnbürste;
- Fig. 11: eine erfindungsgemässe Zahnbürste mit einer Haltevorrichtung;
- Fig. 12a-h: Schaltbilder der Ladeschaltung in verschiedenen Betriebszuständen;
- Fig. 13: eine Verkaufseinheit mit einer erfindungsgemässen Zahnbürste und einem Netzteil.

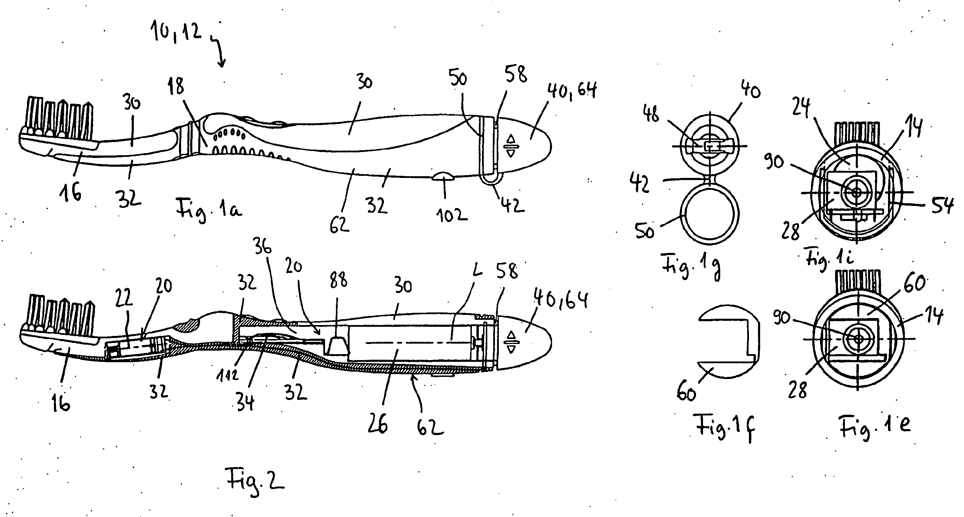

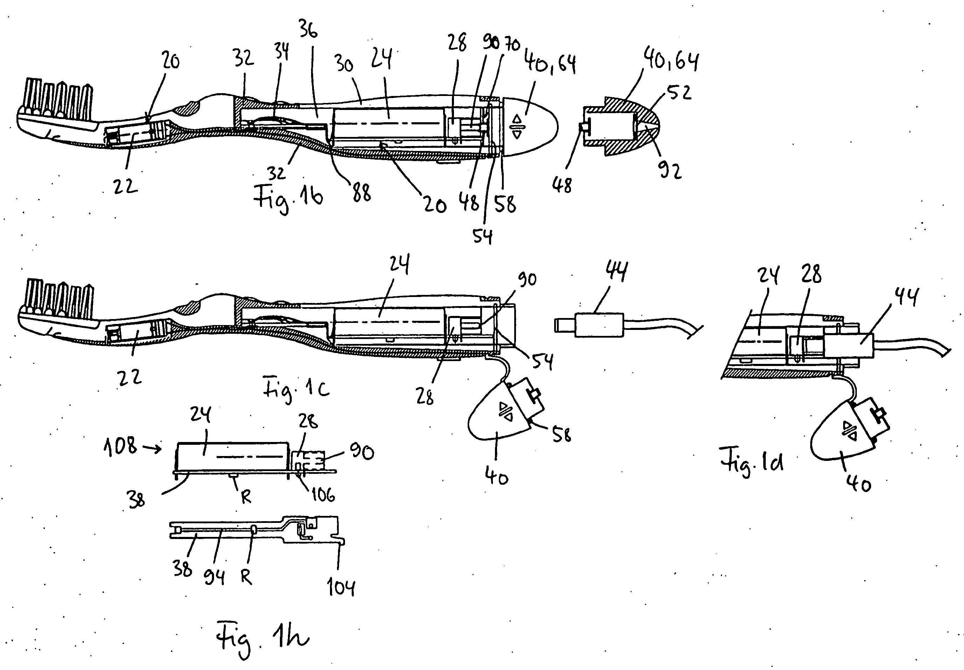

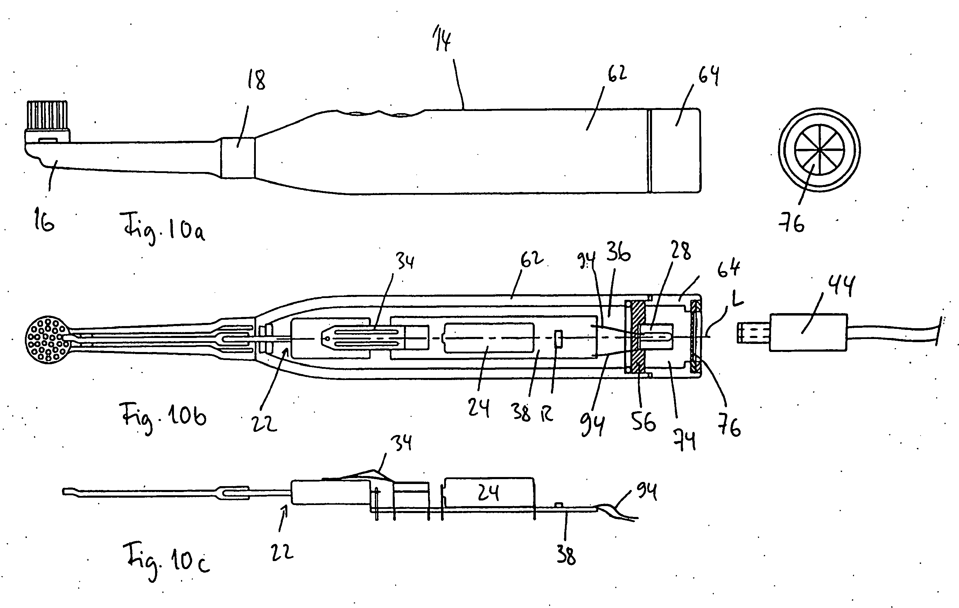

Die Figuren 1, 3-9 zeigen verschiedene erfindungsgemässe Zahnbürsten 10, deren Körper 12 jeweils einen mit Borsten besetztes Kopfbereich 16, einen Griffbereich 14 und einen dazwischen liegenden Halsbereich 16 umfasst. Fig. 10 zeigt eine nicht erfindungsgemässe Zahnbürste mit ähnlichem Grundaufbau. Der Kopfbereich 16 liegt bei 5% - 20%, der gegenüber dem Griffbereich 14 verjüngte Halsbereich 18 bei 15% - 50% und der Griffbereich bei 40% - 80% der Gesamtlänge. Ein Verschluss 40 ist Bestandteil des Griffbereichs 14 und kann bei verschiedenen Ausgestaltungsvarianten 10% - 70% der Grifflänge einnehmen.

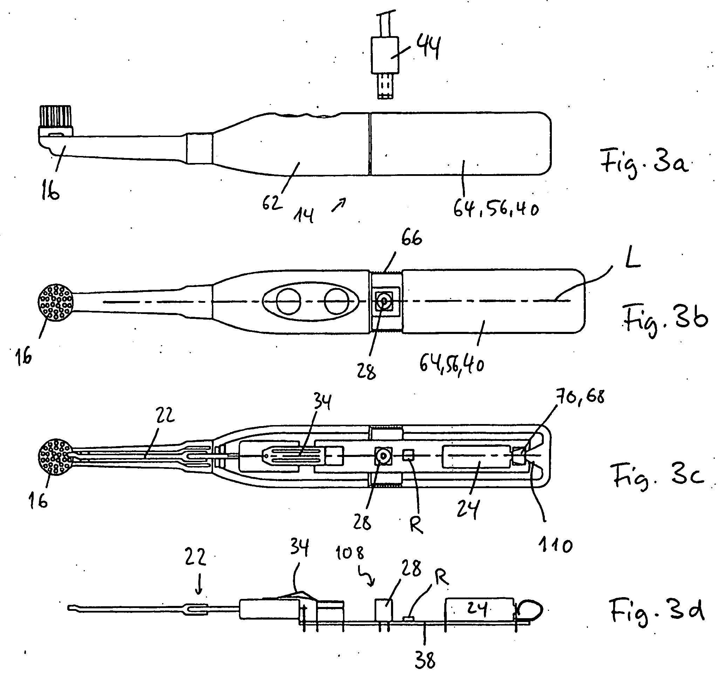

Im Körper 10 sind jeweils Funktionsbauteile 20 mit einer elektrisch betriebenen Funktionseinheit 22, hier einem Motor zum Vibrationsantrieb (Fig. 1, 7-9) bzw. Rotationsantrieb (Fig. 3-6, 10) des Kopfbereichs bzw. der Borstenplatte. Die Zahnbürsten 10 umfassen jeweils einen wiederaufladbaren Energiespeicher 24 (Akkumulator) und ein Kontaktelement 28. Diese sind auf einer Leiterplatte 38 angebracht, die in einem Innenraum 36 des Griffbereichs 13 angeordnet ist. Im Innenraum 36 befindet sich des weiteren ein Schalter 34, der in ein federndes Verbindungselement 88 übergeht, das im eingebauten Zustand einen Pol des Energiespeichers 24 kontaktiert.

Die Leiterplatte 38 verfügt über Mittel 104, die eine form- und kraftschlüssige Verbindung mit der Hartkomponente der elektrischen Zahnbürste erlauben. Vorliegend rasten federnde Schnappnasen 104 (Fig. 1h) hinter einem Kontaktbügel 54 ein. Die Leiterplatte 38 hat eine Dicke von 0.5 - 3 mm vorzugsweise 1 mm. In einigen Ausgestaltungsvarianten wird die Leiterplatte 38 mit den darauf montierten Bauteilen von hinten in den Innenraum 36 der elektrischen Zahnbürste 10 eingeführt.

Figur 2 zeigt ein Vergleichsbeispiel einer Zahnbürste mit einem nicht wiederaufladbaren Energiespeicher 26 in Form einer Batterie. Aufbau und Funktion der Zahnbürste sind in der nicht vorveröffentlichten internationalen Patentanmeldung PCT/EP03/09681 beschrieben. Die äussere Gestalt dieser Zahnbürste und der Einbau der Funktionseinheit 22 ist identisch bei der in Fig. 1a-c gezeigten Zahnbürste verwirklicht. Die Längendifferenz zwischen der Batterie 26 und der Akkumulatorenbaugruppe 108 bestehend aus Akkumulator 24, Kontaktelement 28, Leiterplatte 38 und Verbindungsleitungen (Fig. 1h) kann durch unterschiedlich lange federnde Verbindungselemente 88 ausgeglichen werden. Damit können in vorteilhafter Weise derselbe Bürstenkörper und dieselben Herstellungswerkzeuge und weitgehend dieselben Herstellungsschritte eingesetzt werden. Optional ist der Schalter 34 auf der Leiterplatte 38 der Akkumulatorenbaugruppe 108 angeordnet.

Im folgenden wird die in Fig. 1a-g gezeigte Zahnbürste 10 nur so weit beschrieben, wie für das Verständnis der Erfindung notwendig. Bezüglich Aufbau und Herstellung des Körpers 12 und der Funktionsbauteile 20 wird auf die PCT/EP03/09681 verwiesen.

Akkumulator 24 und Kontaktelement 28 in Form einer Standardbuchse sind auf einer Leiterplatte 38 angebracht (Fig. 1h). Das Kontaktelement 28 ist mit einem Verankerungselement 106 formschlüssig an der Leiterplatte 38 befestigt. Die Akkumulatorenbaugruppe 108 wird in einen Innenraum 36 in einem ersten Gehäuseteil 62 des zweiteiligen Körpers 12 eingeschoben. Der Innenraum 36 wird geschlossen, indem ein zweiter Gehäuseteil 64 in Form eines Verschlusses 40 aufgesetzt wird. Zwischen den beiden Gehäuseteilen ist eine Dichtung 58 angeordnet, die an den Verschluss 40 oder vorzugsweise an die Hartkomponente 30 des Griffbereichs 14 angespritzt ist. Die Dichtung 58 besteht vorzugsweise aus demselben Material wie die Weichkomponente 32 des aus Weich- und Hartmaterial bestehenden Körpers 12. Die Hartkomponente 30 dient zur Herstellung der stabilitätsgebenden Gehäusebestandteile, während die Weichkomponente 32 zur Herstellung zusätzlicher Elemente dient, z.B. federnder Halsbereich 18, Antirutschbeschichtung am Griffbereich 14, Reinigungselemente im Kopfbereich 16, Stützelemente 102 zur Herstellung einer definierten Ablageposition, zum Einbetten der Funktionseinheit 22, Dämpfungselemente im Innenraum 36 zum Dämpfen von Stössen auf den Akkumulator 24. Sämtliche aus der Weichkomponente gebildeten Elemente werden vorzugsweise in einem Arbeitsgang angespritzt, insbesondere mit demselben Material.

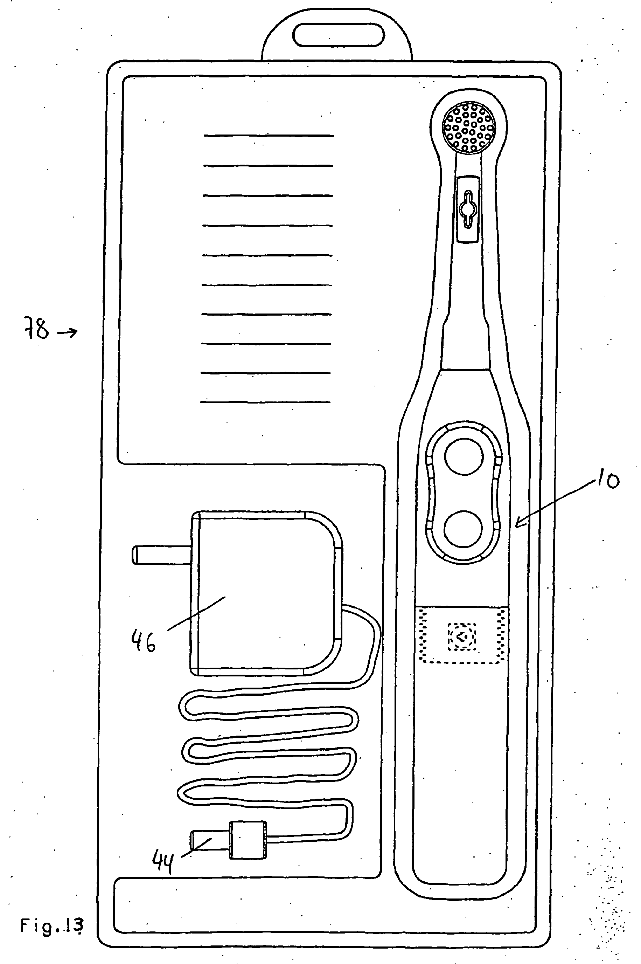

Der Verschluss 40 zusammen mit der Dichtung 58 dient als primäres Dichtelement 56, mit dem der Innenraum 36 beim normalen Gebrauch der Zahnbürste gegen Eindringen von Wasser und anderen Fremdstoffen abgedichtet ist, wie in Fig. 1b dargestellt ist. Fig. 1c und 1d zeigen den geöffneten Zustand, bei dem das Kontaktelement 28 für einen Stecker 44 eines Netzteils 46 (siehe Fig. 13) zugänglich ist. Der Verschluss 40 wird nach Art eines Bajonett-, Schraub- oder Schnappverschlusses auf das erste Gehäuseteil 62 aufgesetzt und ist optional mit einem über das erste Gehäuseteil 62 gezogenen Befestigungsring 50 über ein Filmscharnier 42 verbunden (Fig. 1c, 1g). Es wird eine entsprechende Ausnehmung des Griffteils vorgesehen um ein nahtloses Einrasten des Befestigungsrings 50 zu gewährleisten.

Wie aus der Sicht in Längsrichtung in den Innenraum in Fig. le ersichtlich, ist der Innenraum 36 im geöffneten Zustand nur durch eine Blende 60 (Fig. 1f) abgedeckt, die keine dichtende Funktion hat. Der Zustand ohne Blende 60 ist in Fig. 1i dargestellt. Da somit während des Ladens Wasser eindringen könnte, ist durch folgende Massnahmen sichergestellt, dass ein Betrieb der Funktionseinheit 20 unabhängig von der Stellung des Schalters 34 nur im geschlossenen, abgedichteten Zustand möglich ist: Wie in Fig. 12a-e dargestellt, ist in Serie mit dem manuell zu betätigenden Schalter 34 ein weiterer Schalter 70 geschaltet, der durch einen Kontaktstreifen 48 im Verschluss 40 in Verbindung mit Kontaktbügeln 54 im ersten Gehäuseteil 62 gebildet ist. Der Kontaktstreifen 48 ist in Fig. 1g in der Teilansicht des Verschlusses 40 dargestellt. Der Kontaktstreifen 48 stellt im geschlossenen Zustand eine elektrisch leitfähige Verbindung zwischen dem Pin 90 des Kontaktelements 28 und den Kontaktbügeln 54 her, wodurch die Funktionseinheit 22 im Prinzip betriebsbereit gemacht wird. Wenn das Kontaktelement 44 des Netzteils eingesteckt ist, werden die Kontaktbügel 54 nur von nicht leitfähigen Komponenten des Kontaktelements 44 kontaktiert, so dass der Schalter 70 offen ist.

Im Verschluss 40 befindet sich eine Öffnung 92 und eine Membrane 52, durch die beim Betrieb entstehende Gase entweichen können, die jedoch einen ausreichenden Schutz gegen Wasser bildet.

Bei der Herstellung der Zahnbürste wird der Innenraum 36 in der Hartkomponente mittels eines Kerns ausgeformt und von hinten aus dem Griffteil 14 axial entformt. Dabei werden Flächen, Vorsprünge und Ausnehmungen gebildet, welche zur Montage des Schaltelementes 34, der Akkumulatorenbaugruppe 108 und der Motorenbaugruppe 22 dienen. Die Akkumulatorenbaugruppe 108 ist mittels einem Federelement 88 in axialer Richtung flexibel gelagert. In radialer Richtung sind vorzugsweise Dämpfungselemente aus Weichmaterial vorhanden (nicht dargestellt). Die Leiterplatte 38 verfügt über eine oder mehrere Schnappelemente 104 welche nach dem Einschieben der Baugruppe in eine entsprechende Ausnehmung in der Hartkomponente hinter einem oder beiden Schenkeln des Bügels 54 einrasten. Der Kontaktstreifen 48 und der Pin 90 der Buchse 28 sind so angeordnet, dass der Kontaktstreifen 48 den Pin 90 beim Drehen des Bajonettverschlusses mit einem Vorspann trifft. Vorzugsweise liegt der Pin 90 der Buchse auf der Drehachse des Verschlusses 40.

Der Verschluss 40 wird wie das erste Gehäuseteil 62 aus einer Hart- oder Weichkomponente hergestellt oder aus einer Kombination davon. Der Befestigungsring 50 wird vorzugsweise in einem Arbeitsgang mit dem Verschluss hergestellt und besteht vorzugsweise aus demselben Material wie die übrigen weichen Bestandteile. Er ist flexibel und elastisch ausgestaltet um die Drehung zum Verschliessen/Öffnen des Innenraumes unbeschadet aufnehmen zu können. Damit beim Gebrauch keine Druckstellen auf der Handfläche des Benutzers entstehen, ist der Verbindungssteg 42 zwischen Haltering 50 und Verschluss 40 vorzugsweise seitlich oder auf der Unterseite der elektrischen Zahnbürste vorgesehen.

Die Akkumulatorenbaugruppe verfügt über eine AAA Zelle 24. Der Durchmesser des Innenraumes 36 ist jedoch so ausgestaltet, dass er anstatt dieser Baugruppe auch eine Einweg AA Zelle 26 aufnehmen kann. Somit kann die Herstellung einfach auf eine batteriebetriebene Zahnbürste umgestellt werden. Um die Längendifferenz zwischen AA Zelle und Akkumulatorenbaugruppe mit AAA Zelle zu überbrücken, wird der Kontaktstreifen 48 im Verschluss 40, das Schaltelement 34 oder dessen als Federteil 88 ausgebildeter Fortsatz entsprechend verlängert. Die eigentliche Dichtung 58 des primären Dichtelements 56 ist Weichmaterial oder ein separater O-Ring auf dem ersten Gehäuseteil 62 oder auf dem Verschluss 40.

Zur Herstellung werden folgende Baugruppen vorbereitet: 1. Motorenbaugruppe 22 mit Vibrationseinheit, Leitungen, Kontaktstift, Kontaktbügel 54; 2. Verschluss 40 mit Entgasungsmembrane 52, Kontaktstreifen 48, optional Haltering 50; 3. Akkumulatorenbaugruppe 108 mit Leiterplatte 38 mit Schnappelement 104, Widerstand R, Akkumulator 24, Kontaktelement 28, optional Blende 60; 4. Schalter 34 mit Federelement 88; 5. Zahnbürstenkopf 16 mit Borsten

Die Montage erfolgt mit folgenden Schritten:
1. Hartkomponente 30 der Zahnbürste
2. Montage/ Fixierung Motorenbaugruppe 22 auf der Hartkomponente
3. Weichkomponente 32 Zahnbürste (Überspritzen Motorenbaugruppe 22, erzeugen Schaltmembrane, Haltezonen, Stützelemente 102, Dichtelemente, (optional weichelastische Reinigungselemente, Dämpfungselemente, flexible Zonen im Halsbereich etc.)
4. Einführen Schaltelement 34, Fixierung auf Hartkomponente 30 der elektrischen Zahnbürste
5. Einführen Akkumulatorenbaugruppe 108 in Ausnehmung der Hartkomponente 30, Einrasten hinter Schenkel des Kontaktbügels 54, anschliessend optional Funktionskontrolle
6. Montage Verschluss 40 (optional mittels Haltering 50)
7. Montage Bürstenkopf
8. Verpacken

Fig. 3a-d zeigt eine weitere erfindungsgemässe Zahnbürste mit einem Rotationskopf und einer entsprechenden Antriebseinheit 22. Der Verschluss 40 nimmt als zweiter Gehäuseteil 64 einen wesentlichen Anteil des Griffteils 14 ein und beherbergt den Energiespeicher 24. Das Kontaktelement 28 ist etwa in der Mitte des Griffteils 14 im Innenraum 36 positioniert. Der erste und zweite Gehäuseteil 62, 64 sind miteinander über ein Gewinde 66 verschraubt. Durch geeignete Mittel ist der Öffnungsweg des Verschlusses 40 begrenzt. Der Verschluss 40 ist damit durch Drehung über einen begrenzten Weg für den Ladevorgang zu öffnen, wobei kein komplettes Entfernen des Verschlusses 40 durch den Benutzer vorgesehen ist. Der Weg entspricht wenigstens etwa der Grösse des Kontaktelementes 28. Das Kontaktelement 44 des Netzteils 46 wird an der Vorderseite der Zahnbürste in das Kontaktelement 28 senkrecht zur Längsachse L der Zahnbürste 10 eingesteckt. Alternativ könnte auch ein Schiebeverschluss, welcher am Griffteil 62 einschnappt, vorgesehen werden.

Auch hier ist ein Schalter 70 vorhanden, der beim Verschliessen des Verschlusses 40 automatisch geschlossen wird. Vorzugsweise ist am Ende der Leiterplatte ein gebogenes Federteil 68 angebracht, welches durch den Verschluss 40 gegen einen Akkumulatorpol gedrückt wird und damit als Schalter 70 fungiert. Der Verschluss 40 weist dazu an seiner Innenseite einen auf der Längsachse L angeordneten Nocken 110 auf, der im geschlossenen Zustand unabhängig von der Drehlage auf das Federteil 68 drückt.

Erfindungsgemäss ist der Innenraum 36 mit Energiespeicher 24 und Kontaktelement 28 durch ein primäres Dichtelement 56 in Form des zweiten Gehäuseteils 64, gegebenenfalls mit einer zusätzlichen Dichtung (Weichmaterial oder O-Ring) wasserdicht abgeschlossen.

Zur Herstellung werden zunächst die Baugruppen vorbereitet: 1. Motorenbaugruppe 22 mit Motor, Dichtung, Führung; 2. Verschluss 40 mit Nocken 110; 3. Akkumulatorenbaugruppe 108 mit Leiterplatte 38, Schalter 70, Widerstand R, Akkumulator 24, Buchse 28; 4. Aufsteckzahnbürste mit Bürstenkopf 16.

Die weitere Herstellung/Montage erfolgt mit folgenden Schritten:
1. Hartkomponente 30 Zahnbürste;
2. Weichkomponente 32 Zahnbürste (Erzeugen Schaltmembrane, Haltezonen, Stütznoppen, Dichtelemente, optional weichelastische Reinigungselemente, Dämpfungselemente, flexible Zonen im Halsbereich etc.);
3. Montage/ Fixierung Motorenbaugruppe auf der Hartkomponente;
4. Einführen Akkumulatorenbaugruppe 108 in Ausnehmung der Hartkomponente 30 und Einrasten, dabei elektrische Verbindung zu Motorenbaugruppe mittels Steckkontakten oder Drähten 94 erstellen;
5. Montage Deckel 40;
6. Montage Aufsteckzahnbürste;
7. Verpacken.

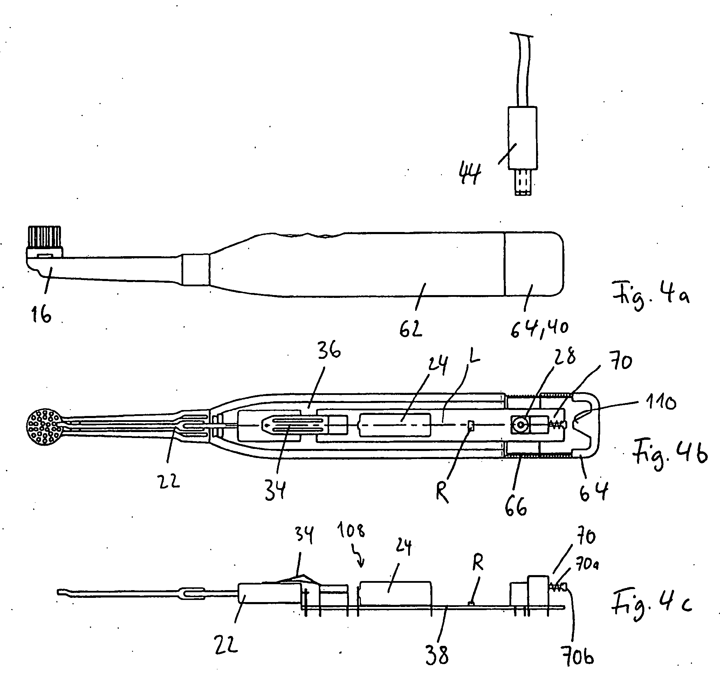

Fig. 4a-c zeigt eine ähnliche Lösung wie Fig. 3a-d. Der Verschluss 40 ist hier wesentlich kürzer und am Ende abgeflacht, damit die Zahnbürste in vertikaler Position geladen werden kann. Das Kontaktelement 28 befindet sich am hinteren Ende des Griffbereichs 14. Optional sind hier die Motorenbaugruppe 22, 34 und die Akkumulatorenbaugruppe 108 mittels der Leiterplatte 38 zu einer einzigen Baugruppe verbunden (Fig. 4c). Die Leiterplatte 38 verfügt über Schaltelement 70, welches beim Verschliessen des Innenraums 36 durch den Verschluss 40 mittels Drehung geschlossen wird. Vorzugsweise sind am verschlussseitigen Ende der Leiterplatte 38 zwei Federteile 70a, 70b angebracht, welche durch den Verschluss 40 gegeneinander gedrückt werden und den Stromkreis schliessen. Herstellung und Montage ist analog zum Beispiel aus Fig. 3a-d.

Der Schalter 70, kann auch räumlich vom Kontaktelement 28 getrennt im Verschluss 40 angeordnet sein.

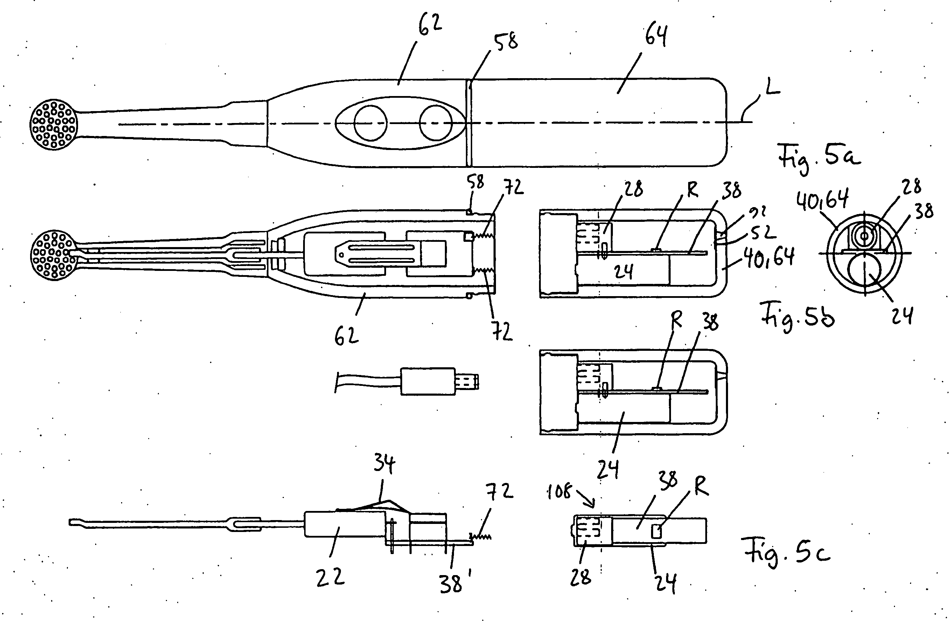

Fig. 5a-c zeigt eine elektrische Zahnbürste mit einer rotierende Aufsteckbürste ähnlich wie in Fig. 3a-d und 4a-c. Das Kontaktelement 28 und der Energiespeicher 28 befinden sich mit der Leiterplatte 38 im Verschluss 40, der zum Laden vollständig vom ersten Gehäuseteil 62 entfernt werden kann und ansonsten auf diesen aufgeschraubt, aufgesteckt oder aufgeschnappt ist. Zwei vorzugsweise an einer weiteren Leiterplatte 38' im ersten Gehäuseteil 62 angeordnete Kontaktfedern 72 kontaktieren im geschlossenen Zustand einen Pol des Akkumulators 24 bzw. den Pin 90 des darüber angeordneten Kontaktelementes 28. Diese Komponenten fungieren damit als Schalter 70 und dienen im geschlossenen Zustand zur Herstellung einer leitfähigen Verbindung zwischen der Akkumulatorenbaugruppe 108 und der Motorenbaugruppe mit Schalter 34.

Die Akkumulatorenbaugruppe verfügt auf der Leiterplatte 38 über ein oder mehrere Schnappelemente, welche nach dem Einschieben der Baugruppe in eine entsprechende Ausnehmung in der Hartkomponente des Verschlusses 40 einrasten. Die Akkumulatorenbaugruppe verfügt vorzugsweise über eine AA Zelle. Der Durchmesser des Innenraumes 36 bzw. der entsprechenden Ausnehmung im Verschluss 40 ist jedoch so ausgestaltet, dass er anstatt dieser Baugruppe auch zwei Einweg AA Zellen aufnehmen kann. Somit kann die Herstellung einfach auf eine Zahnbürste mit Einwegbatterie umgestellt werden.

Das primäre Dichtelement 56 zum Verschliessen des Innenraumes 36 ist durch den Verschluss 40 realisiert, vorzugsweise in Verbindung mit einer Dichtung 58, die in Form von Weichmaterial oder einem O-Ring auf der elektrischen Zahnbürste oder auf dem Verschluss 40 angeordnet ist.

Die Herstellung/Montage ist analog zu den bereits beschriebenen Beispielen mit dem Unterschied, dass die Akkumulatorenbaugruppe in die Ausnehmung im Verschluss eingeführt und eingerastet wird.

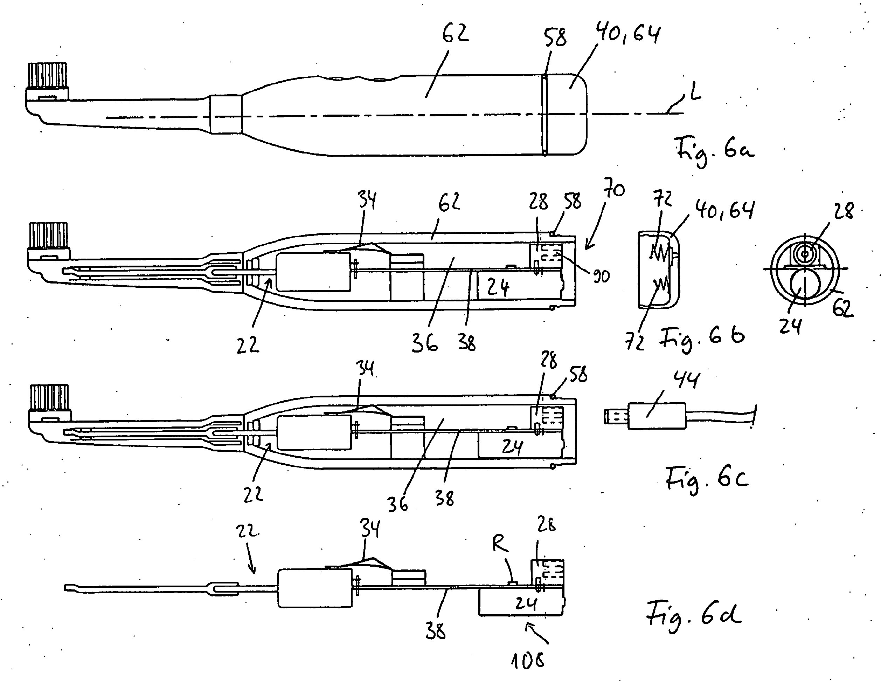

Fig. 6a-d zeigt eine Abwandlung der Elektrozahnbürste aus Fig. 5a-c, bei der sich die Akkumulatorenbaugruppe 108 im griffteilseitigen Teil des Körpers 10 befindet. Kontaktelement 28 und Energiespeicher 24 sind ebenfalls übereinander angeordnet. Der Verschluss 40 enthält nur zwei Federelemente 72, die untereinander leitfähig verbunden sind. Im geschlossenen Zustand des Verschlusses schliessen sie den Pin 90 des Kontaktelements 28 mit einem Akkumulatorpol kurz. Bei dieser Variante kann leicht auf einen Betrieb mit einer AA Einwegbatterie umgerüstet werden, da die Abmessungen des Innenraums 36 dafür ausreichen.

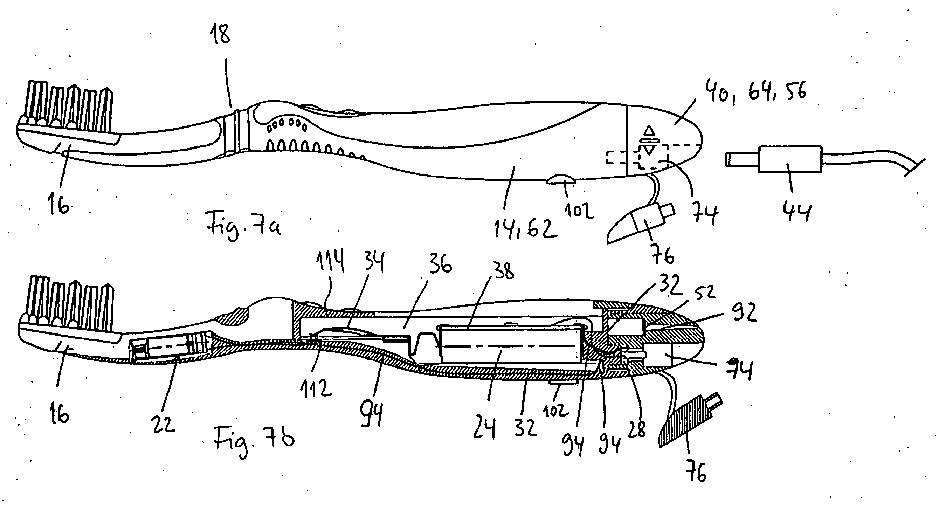

Fig. 7a, b zeigen eine elektrische Zahnbürste mit einer Vibrationseinheit 22, einem wiederaufladbaren Energiespeicher 24 und einem Kontaktelement 28. Der grundsätzliche Aufbau entspricht Fig. 1. Im Unterschied zum Beispiel aus Fig. 1 ist der Innenraum 36 im Griffbereich 14 permanent durch eine primäre Dichtung 56 abgeschlossen. Die primäre Dichtung 56 ist in diesem Fall durch ein zweites Gehäuseteil 64 in Form eines Verschlusses 40 gebildet, das dauerhaft auf das erste Gehäuseteil 62 aufgesetzt ist und zusammen mit diesem den Innenraum 36 begrenzt. Der Verschluss 40 besteht aus Hart- und Weichkomponente 30, 32. Das Kontaktelement 28 und Verbindungsleitungen 94 vom Kontaktelement 28 zum Energiespeicher 24 bzw. zur Leiterplatte 38 sind in die Weichkomponente 32 eingebettet. Vorzugsweise wird das Kontaktelement 28 an der Hartkomponente des Verschlusses 40 fixiert und mit der Weichkomponente über-/umspritzt. Das Kontaktelement 28 besteht im wesentlichen aus einem harten Material (z.B. Metall), das den Spritzdruck und die Temperatur beim Überspritzen aushält. Der Verschluss 40 wird permanent mit dem ersten Gehäuseteil 62 verbunden, z.B. mittels Schweissen oder einer Schnappverbindung.

Das Kontaktelement 28 ist in einer Ausnehmung 74 angeordnet, die entlang der Längsachse der Zahnbürste 10 ausgerichtet ist und vorzugsweise eine zum Kontaktelement 44 des Netzteils komplementäre Form hat. Der Ausrichtungswinkel kann auch bis +/-90° betragen. Ebenfalls im Verschluss 40 angeordnet ist eine Öffnung 92 mit einer Entgasungsmembran 52.

Die Ausnehmung 74 ist im Normalbetrieb durch ein sekundäres Dichtelement 76 abgedeckt, das zum Laden entfernt werden kann. Es hat vorzugsweise eine zur Ausnehmung 74 komplementäre Form und ist mit dem eigentlichen Bürstenkörper 12 über ein Filmscharnier 42 verbunden. Durch die Form des sekundären Dichtelements 76 wird beim Schliessen Material verdrängt, das sich unter Umständen in der Ausnehmung 74 angesammelt hat.

Zur Herstellung werden die Baugruppen vorbereitet: 1. Motorenbaugruppe 22 mit Vibrationseinheit, Leitungen, Kontaktstift 112; 2. Verschluss 40 mit Entgasungsmembrane 52, Kontaktelement 28, evtl. Verbindungsleitungen 94; 3. Akkumulatorenbaugruppe 108 mit Leiterplatte 38, Widerstand R, Akkumulator 24, ohne Kontaktelement 28; 4. Schalter 34; 5. Zahnbürstenkopf 16 mit Borsten

### Montage:

1. Hartkomponente Zahnbürste
2. Montage/ Fixierung Motorenbaugruppe 22 auf der Hartkomponente
3. Weichkomponente Zahnbürste (Überspritzen Motorenbaugruppe, erzeugen Schaltmembrane 114, Haltezonen, Stütznoppen 102, Dichtelemente, optional weichelastische Reinigungselemente, Dämpfungselemente, flexible Zonen im Halsbereich etc.
4. Einführen Schaltelement 34, Fixierung auf Hartkomponente der elektrischen Zahnbürste
5. Einführen Akkumulatorenbaugruppe 108 in Ausnehmung der Hartkomponente, anschliessend optional Funktionskontrolle
6. Herstellen einer leitfähigen Verbindung zwischen dem Kontaktelement 28 im Verschluss und dem Energiespeicher 24
7. Montage Verschluss, Akkumulatorenbaugruppe und Motorenbaugruppe
8. Montage Bürstenkopf
9. Verpacken

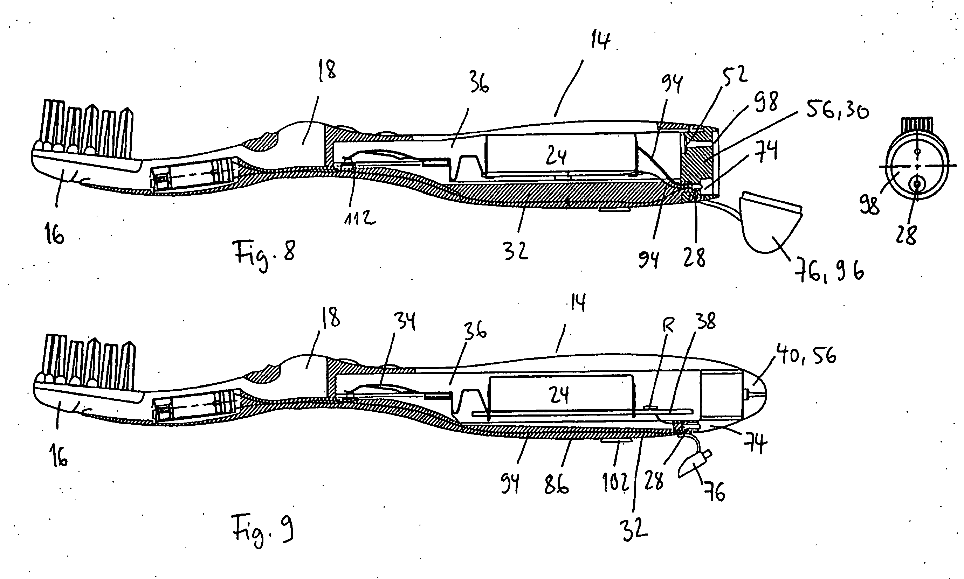

Fig. 8 zeigt ein weiteres Beispiel einer Elektrozahnbürste. Das Kontaktelement 28 ist in das Griffteil 14 eingebettet und befindet sich an der Rückseite der Zahnbürste, wobei die Steckrichtung in Längsrichtung verläuft. Der Innenraum 36 ist durch ein primäres Dichtelement 56 aus Hartkomponente 30 verschlossen. Verbindungsleitungen 94 können in die Weichkomponente 32 eingebettet sein. In der Abschlussfläche 98 an der Unterseite der Zahnbürste sind eine Ausnehmung 74 für das Kontaktelement 44 des Netzteils und die Entgasungsöffnung 92 angeordnet. Die Abschlussfläche 98 ist durch eine Verschlusskappe 96 abdeckbar, die nur aus Hartkomponente bestehen kann. Die Verschlusskappe 96 fungiert als sekundäres Dichtelement 76 zum Schutz des Kontaktelement 28 vor Fremdstoffen.

Die Herstellung erfolgt analog zu Fig. 7a, b mit dem Unterschied, dass das Kontaktelement 28 direkt in das Griffteil 14 eingebettet wird, insbesondere mit Weichkomponente 32 umspritzt wird. Letzteres erfolgt vorzugsweise in einem Arbeitsgang mit dem Einbetten der Motorenbaugruppe.

Fig. 9 zeigt ein weiteres Beispiel für eine Zahnbürste mit primärem und sekundärem Dichtelement 56, 76. Die Ausnehmung 74 befindet sich an der Rückseite 86 des Körpers 12 und ist entlang der Längsachse orientiert. Der Innenraum 36 ist permanent durch einen Verschluss 40 verschlossen. Dieser fungiert als primäres Dichtelement 56 und enthält eine Entgasungsöffnung 92 mit Membran 52. Das Kontaktelement 28 befindet sich in der Wandung des Griffteils 14 und wird durch das sekundäre Dichtelement 76 abgedeckt. Das Kontaktelement 28 ist in die Weichkomponente 32 eingebettet. Der Verschluss 40 kann somit nur aus der Hartkomponente bestehen. Diese Zahnbürste ist für stehende Lagerung, z.B. im Zahnglas, besonders geeignet.

Die Herstellung erfolgt analog zum Beispiel aus Fig. 8.

Bei allen Varianten, insbesondere denen mit permanent geschlossenem Innenraum 36, kann der Innenraum 36 auch durch ein Material ausgegossen werden, sofern das Kontaktelement 28 zugänglich bleibt.

Fig. 10a-c zeigt eine nicht erfindungsgemässe Variante einer Zahnbürste, bei der der Innenraum 36 permanent durch ein primäres Dichtelement 56 verschlossen ist. Das primäre Dichtelement 56 ist durch ein hülsenförmiges zweites Gehäuseteil 64 gebildet, das auf das erste Gehäuseteil 62 aufgesetzt und permanent mit diesem verbunden ist. Das zweite Gehäuseteil 64 bildet eine Ausnehmung 74, in der das Kontaktelement 28 angeordnet ist. Das zweite Gehäuseteil 64 ist an seiner dem ersten Gehäuseteil 62 abgewandten Seite mit einem sekundären Dichtelement 76 versehen. Dieses besteht aus einer sternförmig geschlitzten Membran, die vom Kontaktelement 44 des Netzteils durchstochen werden kann, ansonsten jedoch einen ausreichenden Schutz gegen Wasser, zumindest gegen Spritzwasser, bietet.

Figur 10c zeigt die auf einer gemeinsamen Leiterplatte 38 angeordnete Motoren- und Akkumulatorenbaugruppe. Diese wird nach der Herstellung der Hartkomponente in den Innenraum 36 eingeschoben. Das Kontaktelement wird in den separat hergestellten zweiten Gehäuseteil 64 integriert, insbesondere in die Weichkomponente eingebettet. Vor dem Verbinden des ersten und zweiten Gehäuseteils 62, 64 werden die Verbindungsleitungen 94 der Akkumulatorenbaugruppe und des Kontaktelements 28 verbunden.

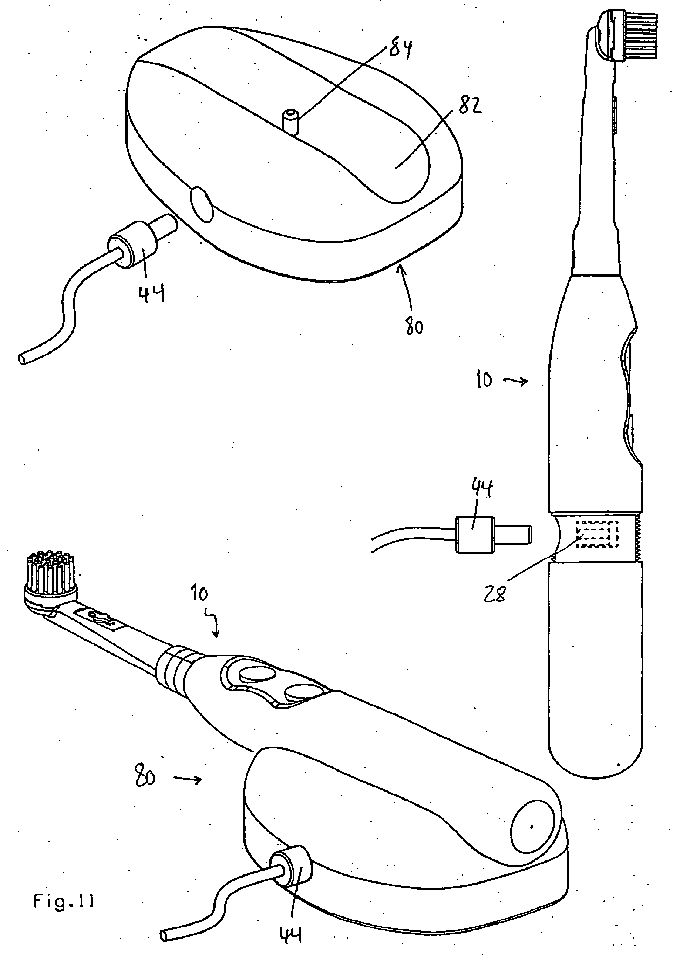

Fig. 11 zeigt eine Haltevorrichtung 80 für eine Zahnbürste 10 analog Fig. 3a-d. Die Haltevorrichtung 80 weist eine an das Griffteil 14 der Zahnbürste 10 angepasste Mulde 82 auf. Das Kontaktelement 28 befindet sich an der Rückseite 86 der Zahnbürste 10. Damit kommt es beim Einlegen in die Haltevorrichtung 80 mit einem Kontaktelement 84 in der Mulde in Kontakt. Dieses ist galvanisch mit einer Buchse 100 verbunden, in die das Kontaktelement 44 des Netzteils 46 eingesteckt werden kann. Die Zahnbürste 10 kann über die Haltevorrichtung 80 oder direkt durch Einstecken des Kontaktelement 44 des Netzteils 46 in das Kontaktelement 28 geladen werden.

Fig. 12a-h zeigen Schaltbilder der Ladeschaltung für die verschiedenen Dichtungsvarianten.

Fall 1: Das Kontaktelement 28 befindet sich zusammen mit dem Energiespeicher 22 im Innenraum 36, der durch einen Verschluss 40 dichtend abgeschlossen wird (Fig. 1, 3-5).

Im Normalbetrieb (Fig. 12a) schliesst das primäre Dichtelement (Verschluss 40) den Innenraum 36 wasserdicht ab. Ein Schalter 70, welcher durch das Aufbringen/Entfernen des Verschlusses 40 betätigt wird, ist geschlossen. Der Verbraucher 22 kann durch einen weiteren Schalter 34 durch den Benutzer ein- und ausgeschaltet werden. Wenn der Verschluss 40 entfernt ist, schaltet der Schalter 70 die Verbindung zwischen dem Akkumulatoren 24 und dem Verbraucher 22 zwingend aus (Fig. 12b). In geöffnetem, d.h. nicht abgedichtetem Zustand, kann somit die elektrische Zahnbürste nicht mehr eingeschaltet werden. Bei der Ladung des Akkumulators 24 durch Einstecken des Steckers 44 in die Buchse 28 ist der Innenraum 36 geöffnet (Fig. 12c). Durch das Anbringen des Schalters 70 kann zusätzlich erreicht werden, dass eine Ladung des Akkumulators 24 in jedem Fall und unabhängig des Zustandes des Schalters 34 nur ohne Last des Verbrauchers 22 geladen werden kann. Wäre der Verbraucher 22 nämlich während der Ladung des Akkumulators 24 in Betrieb (d.h. 34 und 70 geschlossen) und der Akkumulator 24 vollständig entleert, wäre eine Ladung unmöglich.

Fall 2 (Fig. 12d-e): Der Innenraum 36 ist gegenüber dem Kontaktelement 28 in jedem Betriebszustand komplett abgedichtet (Fig. 7-10). Da die primäre Dichtung nicht entfernt wird, werden nur zwei Betriebszustände unterschieden, und zwar der normale Betriebszustand (Fig. 2d) und der Ladezustand (Fig. 12e). Das Öffnen oder Schliessen der sekundären Dichtung muss an sich keinen Einfluss auf die Ladeschaltung haben. Zur Ladung des Akkumulators 24 verfügt die Buchse 28 vorzugsweise über einen integrierten Schalter 70 welcher die Aufgabe des in Fall 1 durch den Verschluss betätigten Schalters 70 übernimmt. Dieser integrierte Schalter 70 garantiert, dass der Akkumulator 24 unabhängig vom Schaltzustand des Schalters 34 geladen werden kann. Der integrierte Schalter 70 wird beim einstecken des Steckers 44 geöffnet (Fig. 12e) und verhindert somit, dass ein vollständig entleerter Akkumulator 24 nicht geladen werden kann, weil der Verbraucher 22 über den Schalter 34 mit dem Akkumulator 24 verbunden ist.

Falls unter Einbezug dieses potentiellen Nachteils der integrierte Schalter 70 nicht vorgesehen wird, ist ein Betrieb mit eingestecktem Stecker 44 grundsätzlich denkbar.

Fall 3 (Fig. 12f-h): Analog zum Fall 1 werden hier wieder drei Betriebszustände unterschieden. Der Schalter 70 entspricht dem in Fig. 6 gezeigten Federelement 72, der Schalter 70' ist wie im Fall 2 vorzugsweise in das Kontaktelement 28 integriert.

Fig. 12f beschreibt den normalen Betriebszustand. Der Benutzer schaltet den Verbraucher 22 über den Schalter 34 ein und aus. Die Schalter 70 (durch den Verschluss betätigt) und 70' (im Kontaktelement 28 integriert) sind geschlossen. Der Widerstand R wird durch den geschlossenen Schalter 70 kurzgeschlossen.

Fig. 12g beschreibt den Zustand, in dem der Verschluss entfernt ist und der Verbraucher unabhängig vom Zustand des Schalters 34 wegen Verschmutzungsgefahr nicht funktionieren soll. Der Verbraucher 22 steht in diesem Betriebszustand über den Widerstand R zwar in elektrischer Verbindung mit dem Akkumulator 24, wird aber trotzdem nicht eingeschaltet werden können, da der Widerstand R höher gewählt wird als der innere Widerstand des Verbrauchers 22, womit das Ziel ebenfalls erreicht wird.

In Fig. 12h Wird ein zusätzlicher vorzugsweise in das Kontaktelement 28 integrierter Schalter 70' vorgeschlagen. Falls der Stecker 44 eingesteckt wird (und damit der Schalter 70' geöffnet wird), kann wie im Fall 2 damit verhindert werden, dass ein vollständig entleerter Akkumulator 24 nicht geladen werden kann, weil der Verbraucher 22 über den Schalter 34 mit dem Netzteil 46 verbunden ist.

Falls unter Einbezug dieses potentiellen Nachteils der integrierte Schalter 70' nicht vorgesehen wird, ist ein Betrieb mit eingestecktem Stecker 44 wie im Fall 2 ebenfalls grundsätzlich denkbar.

Fig. 13 zeigt ein Verkaufsset 78, bei dem Zahnbürste 10 und Netzteil 46 in einer Sichtpackung präsentiert werden.

## Patentansprüche

1. Zahnbürste (10) mit einem Körper (12), der einen Griffbereich (14), einen Kopfbereich (16) und einen zwischen dem Griffbereich (14) und dem Kopfbereich (16) gelegenen Halsbereich (18) umfasst, und mit zumindest teilsweise innerhalb des Körpers (10) angeordneten Funktionsbauteilen (20), die eine elektrisch betriebene Funktionseinheit (22) und eine elektrische Versorgungseinrichtung für die Funktionseinheit (22) umfassen, wobei die elektrische Versorgungseinrichtung einen wiederaufladbaren Energiespeicher (24) und wenigstens ein Kontaktelement (28) aufweist, wobei über das wenigstens eine Kontaktelement (28) eine elektrisch leitfähige Verbindung zwischen einem sich im Anwendungsfall ausserhalb des Körpers befindlichen Netzteil (46) und dem Energiespeicher (24) herstellbar ist, **dadurch gekennzeichnet, dass** der Körper einen ersten Gehäuseteil (62) und einen zweiten Gehäuseteil (64) umfasst, die relativ zueinander zwischen einer offenen und einer geschlossenen Stellung beweglich sind, wobei der Energiespeicher (24) in einem Innenraum (36) des ersten Gehäuseteils oder zweiten Gehäuseteils angeordnet ist, wobei das Wenigstens eine Kontaktelement (28) und der Energiespeicher (24) in der geschlossenen Stellung durch den jeweils andern Gehäuseteil und eine zwischen den beiden Gehäuseteilen wirkenden Dichtung (58) zumindest gegen Spritzwasser abgedichtet sind, und wobei das wenigstens eine Kontaktelement (28) in der offenen Stellung zumindest für den Ladevorgang von aussen zugänglich ist.

2. Zahnbürste nach Anspruch 1, **dadurch gekennzeichnet, dass** der zweite Gehäuseteil (64) als Verschluss (40) zum Abschliessen des Innenraums (36) ausgebildet ist, vorzugsweise als Bajonettverschluss.

3. Zahnbürste nach Anspruch 1 oder 2, **dadurch gekennzeichnet, dass** das Kontaktelement (28) und der Energiespeicher (24) an einer Trägereinheit, insbesondere einer Leiterplatte (38), angeordnet sind, wobei die Trägereinheit mit Kontaktelement (28) und Energiespeicher (24) die Funktion und vorzugsweise auch die Grösse einer Batterie, insbesondere AA oder AAA, hat.

4. Zahnbürste nach Anspruch 3, **dadurch gekennzeichnet, dass** die Trägereinheit zum Verbinden mit dem Körper über Mittel, die eine form- und kraftschlüssige Verbindung erlauben (104), z.B. federnde Schnappnasen, verfügt.

5. Zahnbürste nach einem der vorangegangenen Ansprüche, **dadurch gekennzeichnet, dass** der zweite Gehäuseteil (64) permanent mit dem ersten Gehäuseteil (62) verbunden ist, vorzugsweise mittels eines Filmscharniers.

6. Zahnbürste nach einem der vorangegangenen Ansprüche, **dadurch gekennzeichnet, dass** das Kontaktelement (28) in unmittelbarer Nähe der Trennebene zwischen dem ersten und zweiten Gehäuseteil (62, 64) angeordnet ist.

7. Zahnbürste nach einem der vorangegangenen Ansprüche, **dadurch gekennzeichnet, dass** sie aus einer oder mehreren Struktur gebenden Hartkomponenten, z.B. PS Polystyrol, ABS AcrylButadienStyrol, SAN StyrolAcrylnitril, PET Polyester, PA Polyamid, vorzugsweise aus PP Polypropylen, und mindestens einer Weichkomponente, vorzugsweise aus thermoplastischem Elastomer TPE, besteht.

8. Zahnbürste nach einem der vorangegangenen Ansprüche , **dadurch gekennzeichnet, dass** der erste und der zweite Gehäuseteil (62; 64) miteinander verschraubt sind, wobei vorzugsweise ein Gewinde (66) mit einer Wegbegrenzung verwendet ist.

9. Zahnbürste nach einem der vorangegangenen Ansprüche, **dadurch gekennzeichnet, dass,** ein Betrieb der Funktionseinheit während des Ladevorgangs nicht möglich ist.

10. Zahnbürste nach Anspruch 9, **dadurch gekennzeichnet, dass** ein Schalter (70) mit dem Kontaktelement (28) zusammenwirkt, welcher die Funktionseinheit (22) beim Ladevorgang abkoppelt, so dass nur der Energiespeicher (24) geladen wird.

11. Zahnbürste nach Anspruch 9 oder 10, **dadurch gekennzeichnet, dass** der Schalter (70) mit dem zweiten Gehäuseteil (64) zusammenwirkt, so dass die Funktionseinheit (22) in der offenen Stellung deaktiviert ist.

12. Zahnbürste nach Anspruch 10, **dadurch gekennzeichnet, dass** der Schalter (70) das Kontaktelement (28) sowie ein relativ dazu bewegbares Teil (48, 68, 72) umfasst, wobei das Teil (48, 68, 72) in der geschlossenen Stellung mit dem Kontaktelement (28) eine elektrisch leitfähige Verbindung eingeht.

13. Zahnbürste nach einem der vorangegangenen Ansprüche, **dadurch gekennzeichnet, dass** das Kontaktelement (28) einen Pin (90) aufweist, der mit einem Pol des Energiespeichers (24) unmittelbar elektrisch leitfähig verbunden ist.

14. Zahnbürste nach Anspruch 13, **dadurch gekennzeichnet, dass** das zweite Gehäuseteil (64) einen Kontaktstreifen (48) umfasst, der in der geschlossenen Stellung eine elektrisch leitfähige Verbindung zwischen dem Pin (90) und Kontaktbügeln (54) im ersten Gehäuseteil (62) herstellt, wodurch die Funktionseinheit (22) im Prinzip betriebsbereit gemacht wird.

15. Zahnbürste nach einem der vorangegangenen Ansprüche, **dadurch gekennzeichnet, dass** das Kontaktelement derart orientiert ist, dass die Steckrichtung in Längsrichtung der Zahnbürste oder senkrecht dazu orientiert ist.

16. Zahnbürste nach einem der vorangegangenen Ansprüche, **dadurch gekennzeichnet, dass** sich im Bereich des Kontaktelements eine Blende befindet, welche die übrigen Funktionsbauteile in der offenen Stellung zumindest gegen Spritzwasser abschirmt.

17. Zahnbürste nach einem der vorangegangenen Ansprüche, **dadurch gekennzeichnet, dass** das erste und das zweite Gehäuseteil (62; 64) einen Innenraum (36) umschließen, in dem der Energiespeicher (24) und das wenigstens eine Kontaktelement (28) angeordnet sind.

18. Set, bestehend aus einer Zahnbürste (10) nach einem der Ansprüche 1-17 und einem Netzteil (46), wobei die Zahnbürste (10) und das Netzteil (46) in einer Verpackung derart angeordnet sind, dass zumindest eines der Kontaktelemente (28, 44) des Netzteils oder der Zahnbürste (10) von aussen sichtbar sind.

## Claims

1. Toothbrush (10) having a body (12) which comprises a handle region (14), a head region (16) and a neck region (18), which is located between the handle region (14) and the head region (16), and having functional components (20) which are arranged, at least in part, within the body (12) and comprise an electrically operated functional unit (22) and an electrical supply device for the functional unit (22), the electrical supply device having a rechargeable energy store (24) and at least one contact element (28), and it being possible, via the at least one contact element (28), to produce an electrically conductive connection between the energy store (24) and a power supply unit (46) which, when in use, is located outside the body, **characterized in that** the body comprises a first housing part (62) and a second housing part (64) which can be moved relative to one another between an open position and a closed position, it being the case that the energy store (24) is arranged in an inner space (36) of the first housing part or second housing part, that the at least one contact element (28) and the energy store (24), in the closed position, are sealed at least against splash water by the respectively other housing part and a seal (58) acting between the two housing parts, and that the at least one contact element (28), in the open position, is accessible from the outside at least for the charging operation.

2. Toothbrush according to Claim 1, **characterized in that** the second housing part (64) is designed in the form of a closure (40) for closing off the inner space (36), preferably as a bajonet closure.

3. Toothbrush according to Claim 1 or 2, **characterized in that** the contact element (28) and the energy store (24) are arranged on a carrier unit, in particular a printed circuit board (38), the carrier unit with contact element (28) and energy store (24) having the function, and preferably also the size, of a battery, in particular AA or AAA.

4. Toothbrush according to Claim 3, **characterized in that** the carrier unit, for connection to the body, has means (104) which allow a form-fitting and force-fitting connection, e.g. resilient snap-action noses.

5. Toothbrush according to one of the preceding claims, **characterized in that** the second housing part (64) is connected permanently to the first housing part (62), preferably by means of a film hinge.

6. Toothbrush according to one of the preceding claims, **characterized in that** the contact element (28) is arranged in the immediate vicinity of the separating plane between the first and second housing parts (62, 64).

7. Toothbrush according to one of the preceding claims, **characterized in that** it consists of one or more structure-forming hard components, e.g. PS polystyrene, ABS acrylonitrile-butadiene-styrene, SAN styrene-acrylonitrile, PET polyester, PA polyamide, preferably of PP polypropylene and at least one soft component, preferably formed from thermoplastic elastomer TPE.

8. Toothbrush according to one of the preceding claims, **characterized in that** the first and second housing parts (62; 64) are screwed to one another, use preferably being made of a thread (66) with a distance-limiting means.

9. Toothbrush according to one of the preceding claims, **characterized in that** the functional unit cannot operate during charging.

10. Toothbrush according to Claim 9, **characterized in that** a switch (70) interacts with the contact element (28) which disconnects the functional unit (22) during the charging operation, so that only the energy store (24) is charged.

11. Toothbrush according to Claim 9 or 10, **characterized in that** the switch (70) interacts with the second housing part (64), so that the functional unit (22) is deactivated in the open position.

12. Toothbrush according to Claim 10, **characterized in that** the switch (70) comprises the contact element (28) and a part (48, 68, 72) which can be moved relative thereto, the part (48, 68, 72), in the closed position, being connected in an electrically conductive manner to the contact element (28).

13. Toothbrush according to one of the preceding claims, **characterized in that** the contact element (28) has a pin (90) which is connected directly in an electrically conductive manner to a terminal of the energy store (24).

14. Toothbrush according to Claim 13, **characterized in that** the second housing part (64) comprises a contact strip (48) which, in the closed position, produces an electrically conductive connection between the pin (90) and contact bridges (54) in the first housing part (62), this rendering the functional unit (22), in principle, ready for operation.

15. Toothbrush according to one of the preceding claims, **characterized in that** the contact element is oriented such that the plug-in direction is oriented in the longitudinal direction of the toothbrush or perpendicularly thereto.

16. Toothbrush according to one of the preceding claims, **characterized in that** a shield is located in the region of the contact element and provides protection for the rest of the functional components, in the open position, at least against splash water.

17. Toothbrush according to one of the preceding claims, **characterized in that** the first and the second housing parts (62; 64) enclose an inner space (36) in which are arranged the energy store (24) and the at least one contact element (28).

18. Set comprising a toothbrush (10) according to one of Claims 1 - 17 and a power supply unit (46), the toothbrush (10) and the power supply unit (46) being arranged in a pack such that at least one of the contact elements (28, 44) of the power supply unit or of the toothbrush (10) is visible from the outside.

## Revendications

1. Brosse à dents (10) avec un corps (12), qui comprend une partie de préhension (14), une partie de tête (16) et une partie de col (18) située entre la partie de préhension (14) et la partie de tête (16), et avec des composants fonctionnels (20) disposés au moins en partie en dehors du corps (12), qui comprennent une unité fonctionnelle (22) entraînée électriquement et un dispositif d'alimentation électrique pour l'unité fonctionnelle (22), le dispositif d'alimentation électrique présentant un accumulateur d'énergie (24) rechargeable et au moins un élément de contact (28), une connexion électriquement conductrice pouvant être établie au moyen de l'au moins un élément de contact (28) entre une partie de réseau (46) se trouvant en dehors du corps dans le cas de l'utilisation et l'accumulateur d'énergie (24), **caractérisée en ce que** le corps comprend une première partie de boîtier (62) et une deuxième partie de boîtier (64), qui peuvent se déplacer l'une par rapport à l'autre entre une position ouverte et une position fermée, l'accumulateur d'énergie (24) étant disposé dans un espace interne (36) de la première partie de boîtier ou de la deuxième partie de boîtier, l'au moins un élément de contact (28) et l'accumulateur d'énergie (24) étant rendus étanches au moins vis-à-vis des projections d'eau dans la position fermée par l'autre partie de boîtier respective et un joint d'étanchéité (58) agissant entre les deux parties de boîtier , et l'au moins un élément de contact (28) étant accessible dans la position ouverte au moins pour l'opération de charge depuis l'extérieur.

2. Brosse à dents selon la revendication 1, **caractérisée en ce que** la deuxième partie de boîtier (64) est réalisée sous la forme d'une fermeture (40) pour fermer l'espace interne (36), de préférence sous la forme d'une fermeture à baïonnette.

3. Brosse à dents selon la revendication 1 ou 2, **caractérisée en ce que** l'élément de contact (28) et l'accumulateur d'énergie (24) sont disposés sur une unité de support, notamment une carte à circuits imprimés (38), l'unité de support avec l'élément de contact (28) et l'accumulateur d'énergie (24) ayant la fonction et de préférence aussi la taille d'une pile, en particulier une pile AA ou AAA.

4. Brosse à dents selon la revendication 3, **caractérisée en ce que** l'unité de support dispose de moyens (104) qui permettent une connexion par engagement positif ou par force pour la connexion au corps, par exemple des ergots d'encliquetage élastiques.

5. Brosse à dents selon l'une quelconque des revendications précédentes, **caractérisée en ce que** la deuxième partie de boîtier (64) est connectée de manière permanente à la première partie de boîtier (62), de préférence au moyen d'une charnière à film.

6. Brosse à dents selon l'une quelconque des revendications précédentes, **caractérisée en ce que** l'élément de contact (28) est disposé à proximité immédiate du plan de séparation entre la première et la deuxième partie de boîtier (62, 64).

7. Brosse à dents selon l'une quelconque des revendications précédentes, **caractérisée en ce qu'**elle se compose d'un ou de plusieurs composants durs de structuration, par exemple du PS polystyrène, de l'ABS Acrylbutadiènestyrène, du SAN Styrèneacrylonitrile, du PET polyester, du PA polyamide, de préférence du PP polypropylène, et d'au moins un composant mou, de préférence un élastomère thermoplastique TPE.

8. Brosse à dents selon l'une quelconque des revendications précédentes, **caractérisée en ce que** la première et la deuxième partie de boîtier (62, 64) sont vissées l'une à l'autre, un filetage (66) étant de préférence utilisé avec une limitation de course.

9. Brosse à dents selon l'une quelconque des revendications précédentes, **caractérisée en ce qu'**un fonctionnement de l'unité fonctionnelle pendant l'opération de charge n'est pas possible.

10. Brosse à dents selon la revendication 9, **caractérisée en ce qu'**un commutateur (70) coopère avec l'élément de contact (28), qui désaccouple l'unité fonctionnelle (22) lors de l'opération de charge, de sorte que seul l'accumulateur d'énergie (24) soit chargé.

11. Brosse à dents selon la revendication 9 ou 10, **caractérisée en ce que** le commutateur (70) coopère avec la deuxième partie de boîtier (64) de sorte que l'unité fonctionnelle (22) soit désactivée dans la position ouverte.

12. Brosse à dents selon la revendication 10, **caractérisée en ce que** le commutateur (70) comprend l'élément de contact (28) ainsi qu'une partie (48, 68, 72) mobile par rapport à celui-ci, la partie (48, 68, 72) établissant une connexion électriquement conductrice avec l'élément de contact (28) dans la position fermée.

13. Brosse à dents selon l'une quelconque des revendications précédentes, **caractérisée en ce que** l'élément de contact (28) présente une broche (90) qui est connectée à un pôle de l'accumulateur d'énergie (24), de manière directement conductrice électriquement.

14. Brosse à dents selon la revendication 13, **caractérisée en ce que** la deuxième partie de boîtier (64) comprend une bande de contact (48) qui, dans la position fermée, établit une connexion électriquement conductrice entre la broche (90) et des étriers de contact (54) dans la première partie de boîtier (62), de sorte que l'unité fonctionnelle (22) soit en principe prête à fonctionner.

15. Brosse à dents selon l'une quelconque des revendications précédentes, **caractérisée en ce que** l'élément de contact est orienté de telle sorte que la direction d'enfichage soit orientée dans la direction longitudinale de la brosse à dents ou perpendiculairement à elle.

16. Brosse à dents selon l'une quelconque des revendications précédentes, **caractérisée en ce qu'**un bandeau est situé dans la région de l'élément de contact, lequel protège les autres composants fonctionnels dans la position ouverte au moins contre les projections d'eau.

17. Brosse à dents selon l'une quelconque des revendications précédentes, **caractérisée en ce que** la première et la deuxième partie de boîtier (62 ; 64) entourent un espace interne (36) dans lequel l'accumulateur d'énergie (24) et l'au moins un élément de contact (28) sont disposés.

18. Ensemble, constitué d'une brosse à dents (10) selon l'une quelconque des revendications 1 à 17 et d'une partie de réseau (46), dans lequel la brosse à dents (10) et la partie de réseau (46) sont disposées dans un emballage de telle sorte qu'au moins l'un des éléments de contact (28, 44) de la partie de réseau ou de la brosse à dents (10) puisse être visible depuis l'extérieur.
